(19) Europäisches Patentamt
European Patent Office
Office européen des brevets

(11) EP 1 406 979 B1

(12) **FASCICULE DE BREVET EUROPEEN**

(45) Date de publication et mention de la délivrance du brevet:
**25.05.2011 Bulletin 2011/21**

(21) Numéro de dépôt: **02758529.8**

(22) Date de dépôt: **01.07.2002**

(51) Int Cl.:
***C09D 183/04*** (2006.01) ***E04B 1/66*** (2006.01)
***C04B 41/49*** (2006.01) ***E04F 13/00*** (2006.01)
***E04F 15/00*** (2006.01)

(86) Numéro de dépôt international:
**PCT/FR2002/002286**

(87) Numéro de publication internationale:
**WO 2003/002677 (09.01.2003 Gazette 2003/02)**

(54) **PROCEDE DE REALISATION D'UN REVETEMENT ETANCHE DE SURFACES POUR BATIMENT COMPRENANT UNE MEMBRANE SILICONE RETICULEE ET ETANCHE, COLLE ET KIT PRET A L'EMPLOI POUR LA MISE EN OEUVRE DE CE PROCEDE**

VERFAHREN ZUR HERSTELLUNG VON WASSERDICHTEN BESCHICHTUNGEN AUF BAUELEMENTE DIE EINE VERNETZTE, WASSERDICHTE SILIKONMEMBRAN ENTHALTEN, SOWIE KLEBSTOFF UND VERPACKUNG

METHOD FOR PRODUCTION OF A SEALED COATING FOR SURFACES OF BUILDINGS COMPRISING A CROSS-LINKED SEALED SILICONE MEMBRANE, ADHESIVE AND READY-TO-USE KIT FOR APPLICATION OF SAID METHOD

(84) Etats contractants désignés:
**AT BE BG CH CY CZ DE DK EE ES FI FR GB GR IE IT LI LU MC NL PT SE SK TR**

(30) Priorité: **29.06.2001 FR 0108695**

(43) Date de publication de la demande:
**14.04.2004 Bulletin 2004/16**

(73) Titulaire: **Henkel AG & Co. KGaA**
**40589 Düsseldorf (DE)**

(72) Inventeurs:
- **GIRAUD, Yves**
  **F-69110 Sainte Foy Les Lyon (FR)**
- **MICHIELS, Sylvie**
  **F-69200 Venissieux (FR)**

(56) Documents cités:
**EP-A- 0 040 459** **EP-A- 0 212 790**
**EP-A- 0 248 443** **DE-A- 2 350 410**
**FR-A- 2 753 708** **FR-A- 2 791 693**
**GB-A- 2 056 473** **US-A- 5 286 318**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 406 979 B1

## Description

Le domaine de l'invention est celui des compositions silicones durcissables par réticulation et utilisables notamment comme mastic ou tout autre matériau d'étanchéification, ou pour former des revêtements élastomères hydrofuges, applicables par étendage ou pulvérisation (e.g. : peintures, revêtements semi-épais, souples).

Plus précisément, l'invention concerne la réalisation d'un revêtement étanche à poser sur la surface des sols, des murs ou des plafonds de bâtiment. Ces revêtements seront appelés, dans ce qui suit, par l'expression "revêtements de surfaces". En particulier, les revêtements dont il s'agit sont destinés à être posés dans des endroits ou des pièces humides. Classiquement, ces revêtements comprennent, à titre de couverture extérieure, des carrelages en céramique, en matériau minéral inclus dans une matrice de résine ou dans une matrice de ciment ou bien encore des carrelages en béton.

Outre cette couverture extérieure, par exemple en carrelage, le revêtement dont il est question dans la présente invention, est constitué par une superposition de couches comportant, à partir de la surface à revêtir :

→ éventuellement au moins une couche de primaire d'adhérence,
→ au moins une membrane polymère étanche à l'eau,
→ éventuellement au moins une nappe de matériau fibreux tissé ou non, pour le renfort,
→ au moins une couche de colle,
→ et la couverture extérieure par exemple en carrelage.

Dans ce genre de revêtements de surfaces, on interpose une membrane d'étanchéité constituée par un film polymère souple et déformable, entre la couverture extérieure, à savoir par exemple le carrelage, et la surface (chape) à revêtir de manière étanche.

Ces membranes polymères étanches par exemple sous carrelage, ont vocation à garantir l'étanchéité de la construction dans des pièces ou des endroits humides (douches, salles de bain, cuisines, pièces d'eau, pourtours de piscines...).

Il importe que cette membrane polymère, étanche, puisse adhérer à toutes les surfaces rencontrées dans le domaine du bâtiment (béton, métaux, bois, entre autres), qu'elle soit résistante, qu'elle remplisse de manière durable et fiable dans le temps sa fonction d'étanchéification, et qu'elle permette l'adhérence, sur sa surface externe, de la colle du revêtement extérieur, par exemple en carrelage.

On connaît déjà des revêtements de sols pour pièces ou endroits humides, constitués par une superposition de couches comprenant, à partir de la surface à revêtir :

- un film de primaire d'adhérence recouvrant la surface du sol, du mur ou du plafond,
- une première membrane en (co)polymère acrylique ou en copolymère monomère vinylique/diène comme par exemple le copolymère styrène/butadiène, le plus souvent en (co)polymère acrylique,
- une nappe de renfort en matériau fibreux non tissé (par exemple mat en fibres de polyester),
- une deuxième membrane en (co)polymère acrylique ou en copolymère monomère vinylique/diène comme par exemple le copolymère styrène/butadiène, le plus souvent en (co)polymère acrylique,
- une couche de colle,
- et enfin la couverture extérieure, par exemple en carrelages céramique.

Ces structures multicouches connues comprenant des membranes obtenues à partir e.g. de latex acrylique, présentent un certain nombre d'inconvénients.

Tout d'abord ces membranes polymères étanches acryliques, ne résistent pas à l'eau, peu de temps après leur application. Ainsi, l'eau présente dans l'environnement des travaux, vient perturber la réticulation/durcissement des films polymères acryliques. Il en résulte que leurs qualités mécaniques et leurs qualités de barrière à l'eau peuvent s'en trouvent altérées.

Les membranes étanches faites à partir de polymères organiques souffrent d'un autre inconvénient majeur qui est leur manque d'élasticité. Une fois posées, elles ont donc tendance à se fissurer de sorte qu'elles ne peuvent plus remplir leur fonction première d'étanchéification.

Pour pallier cela, il est nécessaire d'insérer dans la superposition des couches constitutives du revêtement, au moins une nappe en matériau fibreux de renfort. Il est clair que cette opération ne va pas dans le sens de la simplification du procédé de réalisation du revêtement par exemple de sol en carrelage.

De surcroît, ces membranes par exemple sous carrelage en polymère organique ont pour défaut de ne pas être "respirantes". En effet, elles forment barrière à l'eau tout autant qu'à l'air, si bien que sont ainsi crées toutes les conditions propices au développement de moisissures.

Un autre inconvénient de ces superpositions ou couches constituant de tels revêtements de surfaces comprenant des membranes polymères organiques étanches, résulte des très longs temps d'attente de durcissement/réticulation qu'il est nécessaire d'observer entre chaque couche d'enduction de polymère organique. Ces temps d'attente augmentent d'autant plus la durée du procédé de construction du revêtement de surfaces que ce dernier comporte au moins deux membranes polymères organiques d'étanchéification.

Tout cela complique également la tâche de l'opérateur qui réalise ces revêtements de surfaces.

Par ailleurs, les constructions connues de revêtements de surfaces comportant des membranes d'étanchéification en polymère organique, exigent la mise en oeuvre de primaires d'adhérence sur toutes les surfaces, pour avoir une adhérence correcte des membranes en latex et du carrelage sur la surface à revêtir. Une telle enduction systématique de primaires grève la rapidité du procédé de fabrication du revêtement de surfaces.

La demande de brevet européen EP-A-0 248 443 décrit un procédé pour former un film de revêtement étanche et non -uniformément texturé sur une surface murale. Un matériau de sous-couche réticulable est appliqué, consistant en une résine organique, une deuxième couche est appliquée consistant en une émulsion de silicone avec des fibres courtes, et après un revêtement externe d'une résine de silicone est appliqué. L'application d'une couche de colle pour fixer une couverture extérieure n'est pas décrite.

Le brevet US 5286318 décrit un procédé pour former un sol résistant aux radiations électromagnétiques par application et réticulation d'une composition étanche, l'application d'un adhésif et collage d'un matériau électroconducteur. L'adhésif est composé d'un matériau non minéral.

La demande de brevet FR 2791693 décrit un promoteur d'adhérence comprenant un polymère sans silicium et un composé organosilicié comprenant au moins un radical époxy et son utilisation pour la préparation de compositions silicones. La composition d'adhésif ne comprend pas de ciment.

Le brevet FR 2110659 décrit des compositions de ciment composées du ciment, du sable, d'un copolymère d'acétate de polyvinyle, d'un alcool polyvinylique et d'un silicate de magnésium hydraté. L'addition d'un promoteur d'adhérence n'est pas décrite.

Le brevet US 5162060 décrit des compositions pour former des revêtements sur béton ou metal. Ces compositions sont constituées d'un ciment hydraulique, d'un latex, d'une résine époxy et d'un réticulant pour la résine époxy. En plus ces compositions comprenant des silanes portant des groupes alkoxy et une groupe époxyalkyle ou aminoalkyle sont décrits. Des groupes du type hydroxyle ne sont pas décrits.

Dans cet état de la technique, l'un des objectifs essentiels de la présente invention est de remédier aux inconvénients des revêtements de surfaces (ayant par exemple une couverture extérieure en carrelage) de l'art antérieur en particulier en termes de résistance à l'eau, de simplicité de mise en oeuvre et de réduction du temps de pose.

Un autre objectif essentiel de l'invention est de fournir un procédé de réalisation d'un revêtement de surfaces étanche pour bâtiment (sol/mur/plafond) dans lequel le nombre de couches et donc d'opérations de main d'oeuvre soit limité.

Un autre objectif essentiel de la présente invention est de proposer un procédé de réalisation d'un revêtement de surfaces étanche pour bâtiment (sol/mur/plafond) dans lequel la membrane intermédiaire polymère d'étanchéification possède des qualités mécaniques, et en particulier une élasticité, lui permettant de résister aux sollicitations mécaniques dans le temps et d'éviter ainsi le recours à un mat fibreux de renfort dans la superposition de couches constituant le revêtement de surfaces.

Un autre objectif essentiel de l'invention est de proposer un procédé de réalisation d'un revêtement de surfaces étanche pour bâtiment (sol/mur/plafond) dans lequel l'obtention de la membrane polymère d'étanchéification se fasse de manière simple et pratique, à partir d'une dispersion aqueuse de polymère applicable aisément, par exemple au pinceau ou au rouleau.

Un autre objectif essentiel de l'invention est de proposer un procédé de réalisation d'un revêtement de surfaces étanche pour bâtiment (sol/mur/plafond) dans lequel il soit envisageable de s'affranchir, pour certaines surfaces, de l'étape préliminaire d'application d'un primaire d'adhérence.

Un autre objectif essentiel de invention est de fournir un procédé de réalisation d'un revêtement de surfaces étanche pour bâtiment (sol/mur/plafond), dans lequel l'adhérence entre le revêtement et la surface (chape en béton ou en bois par exemple), de même que l'adhérence entre la colle introduite entre la couverture extérieure (par exemple en carrelage) et la membrane d'étanchéification, soit aussi bonne que possible.

Un autre objectif essentiel de invention est de fournir un procédé de réalisation d'un revêtement de surfaces étanche pour bâtiment (sol/mur/plafond) dans lequel la (ou les) membrane(s) d'étanchéification mises en oeuvre, n'est pas sujette au problème de la reprise en eau et n'est pas sensible à l'eau, en particulier peu de temps (environ 3 heures) après son enduction pour former un film polymère réticulé/durci.

Un autre objectif essentiel de l'invention est de proposer un procédé de réalisation d'un revêtement de surfaces étanche pour bâtiment (sol/mur/plafond) dans lequel les durées des opérations de main d'oeuvre et les durées d'attente soient réduites.

Un autre objectif essentiel de l'invention est de fournir un procédé de réalisation d'un revêtement de surfaces étanche, pour bâtiment (sol/mur/plafond) permettant d'obtenir une bonne adhérence sur des surfaces humides et faisant

intervenir des produits qui n'ont pas d'effets nocifs sur l'environnement et qui ne sont pas de nature à souiller les outils et le matériel utilisés pour leurs mises en oeuvre, d'une manière telle que le nettoyage soit lourd et contraignant

Un autre objectif essentiel de l'invention est de fournir une colle pour revêtements de surfaces étanche de bâtiment (sol/mur/plafond), susceptible d'être utilisée pour la mise en oeuvre du procédé utilisé (colle par exemple pour carrelage).

Un autre objectif essentiel de l'invention est de fournir un kit prêt à l'emploi pour la mise en oeuvre du procédé susvisé et comprenant notamment :

- une dispersion aqueuse silicone permettant d'obtenir rapidement, aisément, un film étanche réticulé
- et éventuellement une colle pour la couverture extérieure (par exemple carrelage),
- voire la couverture extérieure (par exemple carrelage).

Ces objectifs parmi d'autres, sont atteints par la présente invention qui concerne tout d'abord un procédé de réalisation d'un revêtement de surfaces étanche, pour bâtiment (sol/mur/plafond), du type de ceux consistant à fixer sur la surface une superposition de couches ou d'éléments comprenant, à partir de la surface à revêtir :

→ éventuellement au moins une couche de primaire d'adhérence,
→ au moins une membrane polymère étanche à l'eau,
→ (éventuellement au moins une nappe de matériau fibreux tissé ou non,)
→ au moins une couche de colle,
→ au moins une couverture extérieure ;

caractérisé en ce que :

a. la membrane étanche est sélectionnée parmi celles susceptibles d'être obtenues à partir d'une dispersion aqueuse d'huile(s) silicone comprenant :

- **A-** 100 parties en poids d'au moins une huile organopolysiloxane (A) susceptible de réticuler par condensation, si nécessaire en présence d'un agent de réticulation (B), en un élastomère ;
- **A'-** éventuellement jusqu'à 30 parties en poids d'au moins une huile organopolysiloxane non réactive ;
- **B-** si nécessaire, de 0,1 à 100 parties en poids d'au moins un agent de réticulation (B) ;
- **C-** éventuellement, jusqu'à 50 parties en poids d'au moins un promoteur d'adhérence (C) ;
- **D-** jusqu'à 200 parties en poids sec d'au moins une charge (D) ;
- **E-** une quantité catalytiquement efficace d'un composé catalytique de durcissement (E) pouvant aller jusqu'à 3 parties en poids ;
- **F-** au moins un émulsifiant (F) ;
- **G-** éventuellement au moins un additif fonctionnel (G) ;
- **H-** et de l'eau ;

b. la colle mise en oeuvre comprend d'au moins un promoteur d'adhérence (C') ;
c. la dispersion aqueuse d'huile(s) silicone est appliquée en film sur la surface ;
d. la réticulation du film silicone intervient ensuite, de préférence à température ambiante ;
e. il est alors procédé à l'application d'au moins une couche de colle additivée avec le promoteur d'adhérence C', de préférence par enduction sur le film silicone réticulé ;
f. puis enfin la couverture extérieure est posée.

Selon ce procédé, on met en oeuvre une dispersion silicone aqueuse permettant d'obtenir une membrane d'étanchéification qui confère aux revêtements de surfaces une résistance à l'eau, trois heures seulement après son application.

De plus, la membrane silicone étanche que l'on réalise dans ce procédé selon l'invention, possède des propriétés mécaniques nettement supérieures aux membranes d'étanchéification organiques (e.g. acryliques) rencontrées dans les systèmes connus et nécessitant l'utilisation de couches de renfort, dont la pose consomme du temps.

Le procédé selon l'invention a également comme grand avantage de réduire significativement la durée de réalisation de revêtements de surfaces étanches et de diminuer le nombre de phases opératoires.

Un autre avantage lié à la mise en oeuvre, dans le procédé selon l'invention, de membranes élastomères silicones d'étanchéification, tient au fait que ces membranes élastomères silicones forment une barrière étanche à l'eau mais sont perméables à l'air, ce qui permet de limiter la prolifération des moisissures.

Il est particulièrement intéressant d'avoir en addition des temps de séchage et donc des durées de procédé

particulièrement réduites, dès lors que les revêtements de surfaces concernés sont à l'extérieur (terrasse). De plus, le procédé selon l'invention permet d'avoir une bonne adhérence sur des surfaces mouillées.

On met également en oeuvre, dans ce procédé, des produits silicones respectant l'environnement et permettant l'élimination facile, par lavage à l'eau, des souillures faites sur les outils utilisés pour l'application.

Enfin, compte tenu de l'élasticité procurée par la membrane silicone d'étanchéification, il est possible de mettre en oeuvre le procédé selon l'invention sur des surfaces susceptibles de subir de petits mouvements.

Le fait de mettre en oeuvre au moins un promoteur d'adhérence C' dans la colle est une disposition importante de l'invention, qui permet de rendre compatible cette colle avec la membrane silicone étanche, que l'on réalise par enduction et réticulation/durcissement de la dispersion aqueuse de silicone.

Suivant une caractéristique remarquable de l'invention, la quantité de promoteur d'adhérence C' dans la colle est inférieure à 20 % par rapport au poids total de la composition constituant la colle, de préférence comprise entre 0,1 et 15 % en poids, et plus préférentiellement encore entre 0,5 et 10 % en poids.

Cette colle pour couverture extérieure de type carrelage par exemple est avantageusement préparée par mélange d'une partie poudre et d'un liquide dispersant, de préférence de l'eau. Le promoteur d'adhérence C'est, de préférence, incorporé dans le liquide dispersant, avant le mélange.

En pratique, la colle mise en oeuvre dans le procédé selon l'invention est une colle à base de ciment et d'un liant spécifique. Elle est dotée d'une grande résistance mécanique et d'une flexibilité qui la rendent particulièrement adaptée pour coller par exemple des carrelages de céramique, de pierre ou de béton.

Selon une modalité préférée du procédé selon l'invention, la colle utilisée a la composition suivante (en parties en poids dans la composition) :

- ciment hydraulique 100
- liant minéral avec additif(s) organique(s) ou inorganique(s) 100-300
  de préférence 170-200
- promoteur d'adhérence (C') (en sec) 1-50
  de préférence 20-40
- eau 20-100
  de préférence 40-80

Dans cette composition, le ciment hydraulique est avantageusement un ciment classique contenant principalement des silicates de calcium $Ca_2SiO_4$ et $Ca_3SiO_5$ (métastable). Il peut s'agir par exemple de ciment Portland.

Concernant le liant minéral, il comprend au moins un composé sélectionné dans le groupe incluant : les sables siliceux, les dérivés cellulosiques, les charges calcaires, les résines acryliques en dispersion, les adjuvants spécifiques et leurs mélanges.

Selon une caractéristique préférée de l'invention, le promoteur d'adhérence C'est identique à C.

Sur le plan pratique, il peut être précisé que la colle peut être préparée en réalisant le mélange d'une poudre à base de ciment hydraulique et de liant minéral (avec additif(s) organique(s) ou inorganique(s)), d'eau et de promoteur d'adhérence (C'). A titre de poudre qui convient bien, on citera par exemple le mélange commercialisé par la Société BAL sous la dénomination BAL-SINGLE PART FLEXIBLE.

Sur le plan pratique encore, il peut être précisé que de manière très avantageuse, la préparation de la colle est conduite en réalisant le mélange de 70 à 90 % en poids de poudre, de 5 à 20 % en poids d'eau et de 2 à 10% en poids de promoteur d'adhérence (% en poids par rapport à la masse totale de la composition comprenant la poudre, l'eau et le promoteur sec).

Sur le plan qualitatif, le promoteur d'adhérence C et/ou C' est un composé hydrosoluble capable de se dissoudre dans l'eau à une température de 25°C à hauteur d'au moins 5 % en poids et choisi parmi les silanes et/ou les POS hydroxylés et porteurs, par molécule d'au moins un hydroxyle et d'au moins une Fonction hydrophile d'ancrage sur support (Fas), ainsi que parmi les mélanges de ces produits, lesdites fonctions Fas identiques ou différentes entre elles étant, de préférence, sélectionnées dans le groupe comprenant les fonctions: amino, époxy, acrylo, méthacrylo, uréido, mercapto, thiol, chloroalkyle.

Plus précisément, le promoteur d'adhérence C ou C'est avantageusement :

- un polydiorganosiloxane hydroxylé linéaire à motifs siloxyles D et/ou MD et/ou une résine POS hydroxylée comprenant des motifs siloxyles T et éventuellement M et/ou D et/ou Q ou bien encore des motifs siloxyles Q et M et/ou D et/ou T, de préférence une résine sélectionnée parmi celles du type T(OH), DT(OH), DQ(OH), DT(OH), MQ(OH), MDT(OH), MDQ(OH) ou les mélanges de celles-ci ;
- et/ou un silane fonctionnalisé ayant pour formule :

$$(R^5)_c\ Si\ (R)_{4-c}$$

formule dans laquelle :

- c est 0 ; 1 ou 2
- les radicaux $R^5$, identiques ou différents, correspondent aux radicaux $R^3$ et $R^4$ de l'huile (A) de formule (I) telle que définie infra,
- le radical R correspond au groupe OH de l'huile polyorganosiloxane (A) de formule (I) telle que définie infra.

Les motifs siloxyles M, D, T, Q utilisés dans la description ci-dessus du promoteur d'adhérence, sont définis comme suit :

- motif M = $R^0{}_3SiO_{1/2}$
- motif D = $R^0{}_2SiO_{2/2}$
- motif T = $R^0SiO_{3/2}$
- motif Q = $SiO_{4/2}$

Les radicaux R sont identiques ou différents et correspondent à un radical hydrocarboné, comme par exemple un radical alkyle (e.g. méthyle, éthyle, isopropyle, tertiobutyle et n-hexyle), hydroxyle, alcényle (e.g. vinyle, allyle) ou bien encore une fonction **Fas**.

Le promoteur d'adhérence (C) ou (C') sont donc des POS, des résines silicones et/ou des silanes porteurs chacun d'au moins un groupe hydroxyle et d'au moins une Fas liée à au moins un atome de Si.

De préférence, les Fas sont des groupements aminoalkyles non salifiés contenant 1 à 6 atomes de carbone de formule générale :

$$-R^{00}\text{-N } R^{01}R^{02} \text{ ou-}R^{00}\text{-NH-}R^{00}\text{-N}R^{01}R^{02}$$

- ♦ $R^{00}$ = reste hydrocarboné divalent, par exemple $-(CH_2)_n-$
- ♦ $R^{01}$, $R^{02}$ : correspondant indépendamment à H, $C_nH_{2n+1}$
- ♦ Valence libre : reliée au Si

Comme illustration d'un promoteur d'adhérence (C) en (C') qui convient bien, on peut citer la résine POS obtenue à partir des δ-aminopropryltriéthoxylsilane hydrolysé et soumis à un "stripping" de l'éthanol formé par l'hydrolyse. La résine polyhomocondensée obtenue est un mélange d'oligomères contenant de 4 à 10 silicium et comprenant des motifs:

$T(OH) = R^0Si(OH)O_{2/2}$
$T = R^0SiO_{3/2}$
$T(OH)_2 = R^0Si(OH)O_{1/2}$
$T(OH)_3 = R^0Si(OH)_3$

Ces motifs étant respectivement présents en quantité décroissante et $R^0 = NH_2(CH_2)_3^-$. Il s'agit par exemple d'une résine T(OH) aminée.

En pratique, les promoteurs d'adhérence C ou C' sont des composés silicones permettant de moduler les propriétés physico-chimiques des compositions élastomères silicones, obtenues après réticulation des dispersions employées dans le procédé selon l'invention.

Concernant la phase silicone de la dispersion selon l'étape a) du procédé de l'invention, et en particulier le constituant ou les constituants essentiels de cette phase silicone, à savoir l'huile (A), elle est avantageusement sélectionnée parmi les huiles α,ω-hydroxylées ou les huiles fonctionnelles comportant par molécule au moins 2 groupes fonctionnels condensables éventuellement après hydrolyse.

Plus précisément encore, ces huiles (A) peuvent être représentées par la formule générique (I) suivante :

(I) 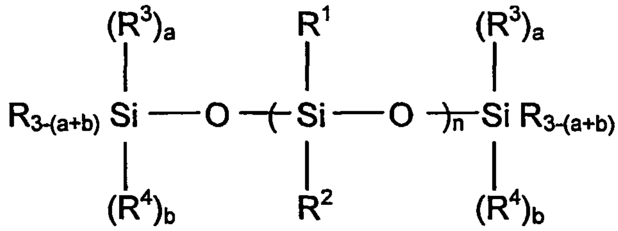

formule dans laquelle :

- a est 0 ou 1
- b est 0 ou 1
- avec a+b=0 ; 1 ou 2
- n a une valeur suffisante pour conférer au polymère de formule (a) la viscosité désirée
- les radicaux R sont identiques ou différents et représentent
    - ■ un groupe OH avec a+b = 2 ;
    - ■ un groupe alcoxy ou alcényloxy contenant de 1 à 10 atomes de carbone ;
    - ■ un groupe aryloxy contenant de 6 à 13 atomes de carbone ;
    - ■ un groupe acyloxy contenant de 1 à 13 atomes de carbone ;
    - ■ un groupe cétiminoxy contenant de 1 à 8 atomes de carbone ;
    - ■ un groupe amino- ou amido-fonctionnel contenant de 1 à 6 atomes de carbone, liés au silicium par une liaison Si-N ;
- les radicaux $R^1$ et $R^2$ sont identiques ou différents et représentent des groupes organiques aliphatiques alkyle, alcényle, ayant de 1 à 10 atomes de carbone, aromatiques phényle, lesdits groupes étant éventuellement substitués par des atomes d'halogènes ou des groupes cyano ;
- les radicaux $R^3$ et $R^4$ sont identiques ou différents et représentent des groupes organiques aliphatiques alkyle, aminoalkyle, polyaminoalkyle, époxyalkyle, alcényle, contenant de 1 à 13 atomes de carbone, aromatiques aryle contenant de 6 à 13 atomes de carbone ;
  au moins 2 groupes fonctionnels condensables éventuellement après hydrolyse étant présents par molécule d'au moins 80 % des radicaux $R^1$ à $R^4$ représentant un groupe méthyle.

A titre d'exemple de radicaux R, on peut citer les groupes :

- ■ alkoxy tels que par exemple méthoxy, éthoxy, octyloxy ;
- ■ alcényloxy tels que par exemple vinyloxy, néxényloxy, isopropényloxy ;
- ■ aryloxy tels que par exemple phényloxy ;
- ■ acyloxy tels que par exemple acetoxy ;
- ■ cétiminoxy tels que par exemple $ON=C(CH_3)C_2H5$ ;
- ■ aminofonctionnels tels que par exemple éthylamino, phénylamino ;
- ■ amidofonctionnels tels que par exemple méthylacétamido ;

Parmi les radicaux organiques aliphatiques ou aromatiques mentionnés ci-dessus, on peut citer en ce qui concerne :

- ■ $R^1$, $R^2$ : par exemple les groupes méthyle, éthyle, octyle, trifluoropropyle, vinyle, phényle ;
- ■ $R^3$, $R^4$ : par exemple les groupes méthyle, éthyle, octyle, vinyle, allyle, phényle ; $-(CH_2)_3-NH_2$ ; $-(CH_2)_3-NH-(CH_2)_2-NH_2$ ;

A titre d'exemples concrets de motifs D: $R^1R^2SiO_{2/2}$, présents dans l'huile (A) on peut citer:

$(CH_3)_2SiO_{2/2}$ ; $CH_3(CH_2=CH)SiO_{2/2}$ ; $CH_3(C_6H_5)SiO_{2/2}$ ; $(C_6H_5)_2SiO_{2/2}$.

A titre d'exemples concrets de motifs M: $RR_3R_4SiO_{1/2}$, on peut citer :

$(CH_3)_2(OH)SiO_{1/2}$ ; ; $(OCH_3)_3SiO_{1/2}$ ; $[O\text{-}C(CH_3)=CH_2]_3SiO_{1/2}$
$[ON=C(CH_3)]_3SiO_{1/2}$ ; $(NH\text{-}CH_3)_3SiO_{1/2}$ ; $(NH\text{-}CO\text{-}CH_3)_3SiO_{1/2}$

Il est important de noter que l'on a mis en oeuvre une sélection d'huile silicone A de viscosité et de nature spécifique.

En effet, la viscosité dynamique de l'huile (A) (et donc globalement de la phase silicone) est supérieure ou égale à 10 Pa.s, de préférence à 50 Pa.s et plus préférentiellement à 70 Pa.s. Cette viscosité est un paramètre important de l'invention. Toutes les viscosités dont il est question dans le présent exposé correspondent à une grandeur de viscosité dynamique à 25°C (dite Newtonienne), c'est-à-dire la viscosité dynamique qui est mesurée de manière connue à un gradient de vitesse de cisaillement suffisamment faible pour que la viscosité mesurée soit indépendante du gradient de vitesse (viscosimètre Brookfield - NORME AFNOR NFT 76106 de mai 1982).

Les éventuelles huiles non réactives (A') peuvent répondre à la même définition que celle donnée ci-dessus pour les huiles réactives (A), à la différence près qu'elles ne comportent pas de fonctions réactives. Les huiles (A') ne peuvent donc pas réticuler chimiquement. Elles sont neutres à cet égard et peuvent par exemple faire office de diluant et/ou de moyen de réglage de la rhéologie.

A titre d'exemples d'huiles (A'), on mentionnera les huiles polydiméthylsiloxanes ayant une viscosité à 25°C allant de 50 à 10000 mPa.s.

Un agent de réticulation (B) est mis en oeuvre, de préférence, lorsque l'huile (A) est un polymère $\alpha,\omega$-(dihydroxy) polydiorganosiloxane.

De nombreux agents de réticulation peuvent être utilisés selon des quantités fonctions de leur nature ; ceux-ci sont bien connus de l'homme de l'art.

On trouvera ci-dessous, à titre d'exemple, une liste d'agents de réticulation avec les quantités correspondantes préconisées, exprimées en parties en poids pour 100 parties d'huile (A) :

- ■ 0,5 à 10 parties de silicate de soude
- ■ 0,1 à 15 parties d'un organosiliconate de métal alcalin (brevet européen EP -A- 266 729)
- ■ 1 à 100 parties d'une microémulsion de résine silsesquioxane (brevets US -A- 3 355 406 ; 3 433 780)
- ■ 5 à 100 parties d'une résine silicone réactive de faible masse moléculaire présentant des groupes alcoxy et acyloxy (US -A- 4 554 187)
- ■ 5 à 100 parties d'une résine silicone de haute masse insoluble dans le toluène (EP-A-304 719)
- ■ 5 à 100 parties d'une résine silicone hydroxylée constituée de motifs de formules $R'_3SiO_{1/2}$ (M) et/ou $R'_2SiO_{2/2}$ (D), associés à des motifs de formules $R'SiO_{3/2}$ (T) et/ou $SiO_2$ (Q), R' étant principalement un radical alkyle en $C_1$-$C_6$, vinyle et trifluoro-3,3,3 propyle et une teneur en poids en groupe hydroxyle comprise entre 0,1 et 10 %. Parmi ces résines, on peut citer tout particulièrement les résines MQ, MDQ, MDT, TD (FR-A-2 638 166)
- ■ 1 à 20 parties d'un silane de formule : $(R'')_u$ Si $X_{(4-u)}$ formule dans laquelle R" est un radical organique monovalent, en particulier méthyle ou vinyle, u est égal à 1 ou 0, X est un groupe condensable et/ou hydrolysable organique de même définition que le radical R de la formule (I) ci-dessus (alcoxy, alcényloxy, acyloxy, cétiminoxy, alkylamino, alkylamido silanes décrits notamment dans US -A- 3 294 725 ; US-A-4 584 341 ; US-A-4 618 642 ; US-A-4 608 412 ; US-A-4 525 565 ; EP-A-387 157; EP-A-340 120 ; EP-A-364 375 ; FR-A-1 248 826; FR - 1 023 477).

A titre d'exemples d'agent de réticulation (B), on peut citer :

- les alcoxysilanes suivants:

  $Si(OC_2H_5)_4$ ; $CH_3Si(OCH_3)_3$ ; $CH_3Si(OC_2H_5)_3$ ; $(C_2H_5O)_3Si(OCH_3)$ ; $CH_2$=$CHSi(OCH_3)_3$ ; $CH_3(CH_2$=$CH)Si(OCH_3)_2$ ; $CH_2$=$CH(OC_2H_5)_3$ ; $CH_2$=$CHSi[ON=C(CH_3)C_2H_5]$ ; $CH_3Si[ON=C(CH_3)_2]_3$ $CH_3Si[-C(CH_3)=CH_2]_3$ ; méthyltri(N-méthylacétamidosilane) ; méthyltris(cyclohéxylaminosilane)

- ou les produits suivants:

  un silicate de soude, un organosiliconate de métal alcalin, une microémulsion de résine silsesquioxane, une résine silicone réactive de faible masse moléculaire présentant des groupes alcoxy et acyloxy, une résine silicone de haute masse insoluble dans le toluène, au moins une résine silicone hydroxylée présentant, par molécule, au moins deux motifs siloxyles différents choisis parmi ceux de type M, D, T et Q ; l'un au moins étant un T ou un Q, un alcoxysilane, un alkylaminosilane, un alkylamidosilane; siliconates, silicates, silices (en poudre ou colloïdales).

Selon une disposition remarquable de l'invention, le promoteur d'adhérence (C) ou (C'), joue le rôle de réticulant

seul ou en complément de l'agent de réticulation (B)

La dispersion comporte au moins une charge (D) choisie parmi :

1) les charges minérales siliceuses renforçantes, de préférence celles choisies dans le groupe comprenant : la silice colloïdale, la silice de précipitation, la silice de combustion ou mélanges de celles-ci ; la silice de combustion étant préférée ; ces poudres siliceuses ayant une surface spécifique BET supérieure à 50 $m^2/g$, de préférence comprise entre 150 et 350 $m^2/g$ ;

2) les charges minérales semi-renforçantes ou de bourrage classique, par exemple celles choisies dans le groupe comprenant les terres de diatomée, le carbonate de calcium, le quartz broyé, le noir de carbone, le dioxyde de titane, l'oxyde d'aluminium, l'alumine hydratée, la vermiculite expansée ou non, l'oxyde de zinc, le mica, le talc, l'oxyde de fer, le sulfate de barium, la chaux éteinte, etc... ; ces charges minérales semi-renforçantes ou de bourrage ayant une granulométrie généralement comprise entre 1 et 300 $\mu$m et une surface BET inférieure à 50 $m^2/g$ ;

3) les charges organiques, de préférence constituées par des copolymères organiques en émulsion et connus sous les dénomination "latex" ou "nanolatex" ; ces "latex" ou "nanolatex" étant formés par exemple par des dispersions aqueuses de particules de polymères issus de procédés classiques de (co)polymérisation en émulsion d'un ou plusieurs monomères organiques polymérisables, avantageusement choisis parmi :

- a) : les (méth)acrylate d'alkyle dont la partie alkyle comporte de préférence de 1 à 18 atomes de carbone, en particulier l'acrylate de méthyle, l'acrylate d'éthyle, l'acrylate de propyle, l'acrylate de n-butyle, l'acrylate d'isobutyle, l'acrylate d'amyle, l'acrylate de lauryle, l'acrylate d'isolamyle, l'acrylate de (2 éthyle-2 hexyle), l'acrylate d'octyle, le méthacrylate de méthyle, le méthacrylate de chloroéthyle, le méthacrylate de butyle, le méthacrylate de (diméthyl-3,3 butyle), le méthacrylate d'éthyle, le méthacrylate d'isobutyle, le méthacrylate d'isopropyle, le méthacrylate de phényle, le chloroacrylate de butyle, le chloroacrylate de méthyle, le chloroacrylate d'éthyle, le chloroacrylate d'isopropyle, le chloroacrylate de cyclohexyle ;
- b) : les esters $\alpha,\beta$-éthyléniquement insaturés d'acides monocarboxyliques dont la partie acide est non polymérisable et dont la partie insaturée comporte, de préférence, de 2 à 14 atomes de carbone et la partie acide de 2 à 12 atomes de carbone, en particulier l'acétate de vinyle, le propionate de vinyle, le butyrate de vinyle, l'acétate d'alkyle, le versatate® de vinyle (marque déposée pour des esters d'acides $\alpha$-ramifiés en $C_9$-$C_{11}$), le laurate de vinyle, le benzoate de vinyle, le triméthylacétate de vinyle, le pivilate de vinyle et le trichloroacétate de vinyle ;
- c) : les esters et les hemi-esters d'acides polycarboxyliques $\alpha,\beta$-éthyléniquement insaturés ayant de 4 à 24 atomes de carbone, en particulier le diméthyle, le maléate de diéthyle, le fumarate de méthyle et d'éthyle, le fumarate d'(éthyl-2-hexyle) ;
- d) : les halogènes vinyliques en particulier le chlorure de vinyle, le fluorure de vinyle, le chlorure de vinylidène, le fluorure de vinylidène ;
- e) : les vinyl-aromatiques présentant de préférence au plus 24 atomes de carbone et choisis en particulier parmi le styrène, l'$\alpha$-méthylstyrène, le 4-méthylstyrène, le 2-méthylstyrène, le 3-méthylstyrène, le 4-méthoxystyrène, le 2-hydroxyméthylstyrène, le 4-éthylstyrène, le 4-éthoxystyrène, le 3,4-diméthylstyrène, le 2-chlorostyrène, le 3-chlorostyrène, le 4-chloro-3-méthylstyrène, le 4-tert-butylstryrène, le 4-dichlorostyrène, le 2,6-dichlorostyrène, le 2,5-difluorostyrène, et le 1-vinylnaphtalène;
- f) : les diènes aliphatiques conjugués présentant de préférence de 3 à 12 atomes de carbone, en particulier le 1,3-butadiène, l'isoprène et le 2-chloro-1,3-butadiène ;
- g) : les nitriles $\alpha,\beta$-éthyléniquement insaturés ayant de préférence de 3 à 6 atomes de carbone tels que l'acrylonitrile et le méthacrylonitrile :

  au moins l'un des ces monomères principaux a) à g) pouvant être copolymérisés avec jusqu'à 40 % en poids d'au moins un autre monomère à caractère ionique, en particulier :

  - un monomère acide carboxylique $\alpha,\beta$-éthyléniquement insaturé mentionné ci-dessus incluant les acides mono et polycarboxyliques (acide acrylique, méthacrylique, maléique, itaconique, fumarique, ...),
  - un monomère éthylénique comportant des groupes amines secondaires, tertiaires ou quatemisées (vinyl-pyridines, diéthyl-aminoéthylméthacrylate, ....),
  - un monomère éthylénique sulfoné (vinylsulfonate, styrène-sulfonate,...),
  - un monomère éthylénique zwitterionique (acrylate de sulfopropyl-(diméthylamino-propyle) ou à caractère non-ionique en particulier,
  - les amides d'acides carboxyliques insaturés (l'acrylamide, le méthacrylamide, ...),
  - les esters de (méth)acrylates et d'alcools polyhydroxypropyles ou polyhydroxyéthylés,
  - les silanes vinyliques et/ou acryliques (tel que le vinyltriméthoxysilane et le vinyltriéthoxysilane) ;

4) dans le cas de l'emploi d'une charge minérale siliceuse, ladite charge peut avantageusement être mise en oeuvre sous forme :

- a) de suspension de silice traitée à l'aide d'organosilazane dans une matrice silicone comprenant un polyorganosiloxane réactif linéaire portant par exemple à chaque extrémité de chaîne un groupe hydroxy, cette suspension étant obtenue par un procédé consistant essentiellement à introduire l'organosilazane dans le milieu de préparation : d'une part avant et/ou sensiblement simultanément à la mise en présence d'au moins une partie de la matrice silicone mise en oeuvre avec la charge particulaire utilisée, cette introduction de l'organosilazane s'opérant avec une fraction d'organosilazane correspondant à une proportion se situant dans l'intervalle allant de 8 à 30% en poids sec par rapport à la charge de silice, et d'autre part après cette mise en présence de la charge avec tout ou partie de la matière silicone ; cette suspension et son procédé de préparation étant décrits dans la demande de brevet internationale WO-A-00/37549 ;
- b) de dispersion aqueuse obtenue :

  ☐ par malaxage d'un mélange constitué de :

  - 100 parties en poids d'une phase silicone φs de viscosité dynamique à 25°C au moins égale à 10 Pa.s, de préférence à 50 Pa.s et, plus préférentiellement encore à 70 Pa.s, φs comprenant l'huile ou un mélange d'huiles (A) déjà polymérisée(s) et éventuellement au moins un des constituants (B), (C) ou (E);
  - 0,5-20 parties en poids d'au moins un agent émulsifiant (F), la HLB dudit agent émulsifiant ou du mélange d'agents émulsifiants étant d'au moins 10 ;
  - 0-100 parties en poids de charge (D) ;
  - 2-20 parties en poids d'eau ;
    le rapport pondéral eau / eau+agent(s) tensioactif(s) étant tel que la viscosité du mélange eau + agent (s) tensioactif(s) soit voisine de ou supérieure à la moitié de celle de la phase silicone (φs) ;
    pendant une durée et dans des conditions de cisaillement suffisantes pour obtenir une émulsion "huile dans eau" de granulométrie de l'ordre de 0,1 à 5 micromètres ;

  ☐ par dilution éventuelle avec de l'eau jusqu'à obtenir un extrait sec de 25 à 97%;
  ☐ puis par addition :

  - du ou des constituant(s) non présent(s) dans la phase silicone φs
  - et/ou de 0-100 parties en poids de charge (D) ;

  la charge (D) se présentant au moins en partie sous forme d'une suspension aqueuse de silice colloïdale qui est introduite en totalité dans l'enceinte de malaxage avant l'obtention de l'émulsion ;

5) dans le cas de l'exemple : d'une charge minérale non siliceuse, ladite charge peut avantageusement être mise en oeuvre sous forme d'une dispersion obtenue :

■ par réalisation d'une émulsion par malaxage d'un mélange constitué de:

- 100 parties en poids d'une phase silicone (φs) de viscosité dynamique à 25°C au moins égale à 10 Pa.s, de préférence à 50 Pa.s et, plus préférentiellement encore à 70 Pa.s, φs comprenant l'huile ou un mélange d'huiles (A) déjà polymérisée(s) et éventuellement au moins un des constituants (B), (C) ou (E) ;
- 0,5-20 parties en poids d'au moins un agent émulsifiant (F), la HLB dudit agent émulsifiant ou du mélange d'agents émulsifiants étant d'au moins 10 ;
- 0-100 parties en poids de charge (D) ;
- 2-20 parties en poids d'eau ;
  le rapport pondéral eau / eau + agent(s) tensioactif(s) étant tel que la viscosité du mélange eau + agent(s) tensioactif(s) soit voisine de ou supérieure à la moitié de celle de la phase silicone (φs) ;
  pendant une durée et dans des conditions de cisaillement suffisantes pour obtenir une émulsion "huile dans eau" de granulométrie de l'ordre de 0,1 à 5 micromètres ;

■ par dilution éventuelle avec de l'eau jusqu'à obtenir un extrait sec de 25 à 97%;
■ puis par addition :

- du ou des constituant(s) non présent(s) dans la phase silicone (φs)

- et/ou de 0-100 parties en poids de charge (D) ;

ladite charge (D) étant apportée, dans le processus d'obtention de la dispersion, sous forme de suspension(s) aqueuse(s) d'au moins un composé hydrophile, avec la condition selon laquelle dans le cas où la charge (D) apportée dans le processus d'obtention de la dispersion, est au moins en partie constituée par au moins une suspension aqueuse de (co)polymère(s) organique(s), alors au moins une partie de cette (ou ces) suspension (s) aqueuse(s) de charge (D) est (sont) introduite(s) dans l'enceinte de malaxage avant l'obtention de l'émulsion

6) et les mélanges de charges (D) de type 1/ ou de type 2) définis ci-dessus, de type 1) et de type 3) définis ci-dessus ou bien encore de type 2) et de type 3) définis ci-dessus.

De préférence, les charges (D) sont choisies dans le groupe comprenant :

- la silice précipitée, la silice de combustion les carbonates et leurs mélanges ;
- la silice colloïdale ;
- les suspensions aqueuses de silice ("Slurry").

Selon une variante, ces dispersions utilisées dans le cadre de l'invention, peuvent comprendre en plus de la charge (D) hydrophile apportée sous forme de suspension aqueuse, une charge (D') qui est impliquée dans le processus d'obtention de la dispersion, sous forme pulvérulente. Cette charge (D') amenée en poudre dans le mélange conduisant à la dispersion se distingue de la charge (D) hydrophile sèche, au travers de sa surface spécifique Ss ($m^2/g$) qui est réduite, à savoir :

$$Ss \leq 5$$

de préférence

$$Ss \leq 3$$

Comme exemples de charges (D') pulvérulentes, on peut citer : $CaCO_3$, $SiO_2$, $TiO_2$, $Al_2O_3/H_2O$.
Avantageusement, la charge (D') peut représenter 5 à 100 parties en poids sec pour 100 parties en poids de phase silicone φs.
La mise en émulsion "huile dans eau" de la phase silicone est réalisée :

- par introduction de l'huile silicone (A) dans un mélange eau et/ou suspension(s) aqueuse(s) de charge (D) + agent (s) émulsifiant(s) (F) ;
- ou par introduction de l'eau et/ou suspension(s) aqueuse(s) de charge (D) dans un mélange phase silicone (φs) + agent(s) émulsifiant(s) (F) et malaxage à une température de l'ordre de 10 à 50°C.

La viscosité de la dispersion en silicone aqueuse mise en oeuvre dans le cadre du procédé selon l'invention est comprise entre 0,1 et 1000 Pa.s, de préférence entre 10 et 100 Pa.s.
Ces charges (D) sont introduites dans l'émulsion sous forme de poudre sèche ou sous forme de dispersion aqueuse, par exemple, par simple mélange.
Les composés catalytiques de durcissement (E) sont bien connus de l'homme de l'art ; ce sont les sels d'acides carboxyliques et les halogénures de métaux tels que par exemple le plomb, le zinc, le zirconium, le titane, le fer, le baryum, le calcium, le manganèse et tout particulièrement l'étain.
On peut citer :

■ les produits de réaction de dicarboxylates d'étain et de polysilicate d'éthyle (US - A- 3 862 919),
■ les produits de réaction du diacétate de dibutylétain et d'un silicate d'alkyle ou d'un alkyltrialcoxysilane (BE-A - 842 305),
■ les bischélates d'étain (EP - A- 147 323 ; 235 049),
■ les dicarboxylates de diorganoétain (GB -A- 1 289 900).

Ils peuvent être mis en oeuvre selon des quantités pouvant aller jusqu'à environ 3 parties en poids, de préférence

voisines de 0,05 à 1 partie en poids pour 100 parties d'huile (A).

S'agissant des émulsifiants (F), ils peuvent être des tensioactifs ioniques ou non ou des polymères hydrosolubles.

De préférence, ce sont des tensioactifs non-ioniques. A titre d'exemples, on peut citer les acides gras alcoxylés, les alkylphénols polyalcoxylés, les alcools gras polyalcoxylés, les amides gras polyalcoxylés ou polyglycérolés, les alcools et les alphadiols polyglycérolés, les polymères blocs oxyde d'éthylène-oxyde de propylène ainsi que les alkylglucosides, les alkylpolyglucosides, les sucroéthers, les sucroesters, les sucroglycérides, les esters de sorbitan et les composés éthoxylés de ces dérivés de sucres.

Selon une variante, les émulsifiants (F) sont sélectionnés parmi les agents tensioactifs anioniques tels que par exemple les alkylbenzène-sulfonates, les alkylsulfates, les alkyléthersulfates, les alkylaryléthersulfates, les dioctylsulfosuccinates, de métaux alcalins.

L' (Le mélange d') émulsifiant(s) est choisi en fonction de la nature de l'huile silicone (A) à émulsifier ; un HLB de l'ordre de 11 à 15 est généralement choisi pour émulsifier une huile silicone (A) constituée par un polymère $\alpha$, $\omega$bis (hydroxy)polydiméthylsiloxane. Le rapport pondéral eau / eau+ émulsifiant(s) (F) est fonction de la viscosité de la phase silicone ($\varphi$s) et de la nature du (mélange de) tensioactif(s) ; ce rapport est par exemple de l'ordre de 20/100 à 70/100, préférentiellement de l'ordre 25/100 à 60/100 pour stabiliser une émulsion d'une phase silicone consistant en une huile $\alpha$,$\omega$-dihydroxylée de viscosité de l'ordre de 30 à 500 Pa.s, à l'aide d'un nonylphénol présentant 9 ou 10 motifs éthoxy comme seul agent émulsifiant (F).

S'agissant des autres additifs fonctionnels (G) susceptibles d'être mis en oeuvre, ce sont notamment des plastifiants et/ou des sels et/ou des agents épaississants et/ou des agents dispersants de charges, ces derniers étant, de préférence, sélectionnés dans le groupe de produits à fonction(s) hydrophile(s) anionique(s) et plus préférentiellement encore dans le groupe comprenant les polyacrylates et/ou les (poly)phosphates.

Ces additifs (G) peuvent également ou plus précisément être :

- ■ des plastifiants comme par exemple les huiles polydiméthylsiloxanes de viscosité de l'ordre de 300 à 10.000 mPa.s., les dioctylphtalates, dialkylbenzènes éventuellement en émulsion aqueuse, selon des quantités de 0 à 70 parties en poids pour 100 parties en poids d'huile (A) ;
- ■ des agents épaississants comme les polymères hydrosolubles de masse moléculaire supérieure à 10 000 g./mole, tels que par exemple les polyacrylates de métaux alcalins, les alcools polyvinyliques, les polyéthylènes glycols, les polyvinylpyrrolidones, les carraghénanes, les alginates, les méthylcelluloses, les hydroxyalkylcelluloses, la gomme xanthane en quantités pouvant aller jusqu'à 10 % en poids de la dispersion aqueuse finale ;
- ■ des agents dispersants de charges comme par exemple les polyacrylates de métaux alcalins de masse moléculaire inférieure à 5 000, les phosphates minéraux en quantités pouvant aller jusqu'à 10 % en poids de la dispersion aqueuse finale ;
- ■ éventuellement des pigments minéraux ou organiques en quantité inférieure à 4% de préférence à 2% poids par rapport à la masse totale de la dispersion.

Ces additifs (G) peuvent être introduits soit dans la phase silicone avant sa mise en émulsion, soit à l'émulsion avant dilution.

La dispersion silicone aqueuse (A/B/C/D/E/F/G/H), mise en oeuvre dans le procédé selon l'invention peut, par exemple, être celle décrite dans le FR-A-2 753 708 (=WO-A-98/13410).

Après avoir détaillé les caractéristiques de la colle et de la dispersion en silicone aqueuse mises en oeuvre dans le procédé selon l'invention, on précisera que le revêtement extérieur est avantageusement choisi parmi les carrelages, de préférence parmi les carrelages à base d'argile, de terre cuite, de quartz blanc, d' adjuvants inorganiques de résine (liant de poudre de marbre, de ciment, de sable, de grès, de faïence et/ou de pigments).

Sur une caractéristique remarquable de l'invention, et compte tenu des performances intéressantes du revêtement de surface réalisé selon l'invention, il est possible d'envisager que la superposition de couches constituant le revêtement ne comprend pas de primaires, dès lors que la surface à revêtir est en bois.

Dans le cas où le primaire s'avère nécessaire, il est, de préférence, choisi dans le groupe : résines polysiloxanes, organosilanes aminés, organosilanes à fonction époxy, organosilanes à fonction isocyanurate ou organosilanes à fonction acrylate ou mélanges d'organosilanes avec des polyacrylates, ou leurs mélanges, les produits du groupe sus-défini étant en solution dans des solvants type toluène, butanol ou éther de glycol. Un primaire, qui convient, consiste par exemple en une solution de résine polyméthylsiloxane dans le toluène commercialisé par WITCO sous la dénomination SILQUEST AP 134.

Suivant un autre de ses aspects, la présente invention concerne une colle pour revêtement de surface étanche de bâtiments (sol/mur/plafond), susceptible d'être utilisée pour la mise en oeuvre telle que décrit ci-dessus, cette colle étant caractérisée en ce qu'elle comprend au moins un promoteur d'adhérence (C'), également défini supra.

Pour plus de détails sur les autres caractéristiques de la colle selon l'invention, on se référera à la description

de la colle faite ci-dessus en référence au procédé selon l'invention.

En pratique, la colle selon l'invention est destinée aux couvertures extérieures, par exemple de type carrelage, fixées sur une ou plusieurs membranes polymères d'étanchéification.

Le mélange de ces ingrédients est effectué à l'aide de tout moyen d'homogénéisation approprié, e.g. extrudeuse à vis simple ou multiple, malaxeur planétaire, malaxeur à cochet, disperseur lent, malaxeur statique, malaxeur à pale, à hélice, à bras ou à ancre.

Avantageusement, le mélange du ciment, de l'eau et du promoteur d'adhérence C'est réalisé juste avant l'application.

En pratique, la méthodologie générale est la suivante :

- la surface du support à revêtir est rendue lisse et dépoussiérée,
- la surface est éventuellement enduite à l'aide d'une solution de primaire,
- on laisse sécher plusieurs dizaines de minutes,
- on dépose la dispersion silicone aqueuse à l'aide d'un pinceau, pour former un film, selon un taux de dépôt de 200 à 2000 $g/m^2$, de préférence 600 à 1000 $g/m^2$,
- on laisse s'opérer la réticulation/durcissement pendant plusieurs heures à température ambiante,
- on prépare la colle à carrelage additivée avec promoteur d'adhérence (C'),
- on étend la couche de colle additivée avec le promoteur d'adhérence (C'), sur la membrane d'étanchéification en élastomère silicone, et
- on applique la couverture extérieure, c'est-à-dire par exemple les carrelages, sur la couche de colle.

Suivant encore un autre de ses objets, la présente invention vise un kit prêt à l'emploi pour la mise en oeuvre du procédé tel que défini ci-dessus.

Ce kit comporte notamment:

- ■ éventuellement au moins une composition de primaire d'adhérence,
- ■ au moins une dispersion aqueuse d'huile(s) silicone comprenant :
  - **A-** 100 parties en poids d'au moins une huile organopolysiloxane (A) susceptible de réticuler par condensation, si nécessaire en présence d'un agent de réticulation (B), en un élastomère ;
  - **A'-** éventuellement jusqu'à 30 parties en poids d'au moins une huile organopolysiloxane non réactive;
  - **B-** si nécessaire de 0,1 à 100 parties en poids d'au moins un agent de réticulation (B) ;
  - **C-** éventuellement, jusqu'à 50 parties en poids d'au moins un promoteur d'adhérence (C) ;
  - **D-** jusqu'à 200 parties en poids sec d'une charge (D); ..
  - **E-** une quantité catalytiquement efficace d'un composé catalytique de durcissement (E) pouvant aller jusqu'à 3 parties en poids ;
  - **F-** au moins un émulsifiant (F) ;
  - **G-** éventuellement au moins un additif fonctionnel (G) ;
  - **H-** et de l'eau ;

ladite dispersion permettant d'obtenir après enduction sur un support et réticulation, une membrane étanche ;

- • au moins une colle telle que définie supra
- • et éventuellement au moins une couverture extérieure.

La couverture extérieure, c'est-à-dire par exemple les carrelages, peut ou non faire partie du kit selon invention

Ce kit qui comprend au moins les produits permettant de faire adhérer le revêtement de surface et de le rendre étanche à l'eau, se présente sous la forme d'un conditionnement rassemblant dans un même tout commercial ces éléments permettant de réaliser le revêtement de surface étanche.

Selon une variante, les produits pour la mise en oeuvre du procédé selon l'invention pourraient être conditionnés et vendus séparément.

L'invention concerne également l'utilisation :

- d'une dispersion aqueuse d'huile silicone comprenant :
  - **A-** 100 parties en poids d'au moins une huile organopolysiloxane (A) susceptible de réticuler par condensation, si nécessaire en présence d'un agent de réticulation (B), en un élastomère ;
  - **A'-** éventuellement jusqu'à 30 parties en poids d'au moins une huile organopolysiloxane non réactive ;

- **B-** si nécessaire, de 0,1 à 100 parties en poids d'au moins un agent de réticulation (B) ;
- **C-** éventuellement, jusqu'à 50 parties en poids d'au moins un promoteur d'adhérence (C) ;
- **D-** jusqu'à 200 parties en poids sec d'une charge (D) ;
- **E-** une quantité catalytiquement efficace d'un composé catalytique de durcissement (E) pouvant aller jusqu'à 3 parties en poids ;
- **F-** au moins un émulsifiant (F) ;
- **G-** éventuellement au moins un additif fonctionnel (G) ;
- **H-** et de l'eau;

- et d'une colle de la couverture extérieure (par exemple carrelages) comprenant au moins un promoteur d'adhérence (C') tel que défini ci dessus ;

pour la réalisation d'un revêtement de surfaces étanche, pour bâtiment (sol/mur/plafond), ledit revêtement étant constitué d'une superposition comprenant à partir de la surface à revêtir:

→ éventuellement au moins une couche de primaire d'adhérence,
→ au moins une membrane polymère étanche à l'eau,
→ (éventuellement au moins une nappe de matériau fibreux tissé ou non),
→ au moins une couche de colle,
→ au moins une couverture extérieure.

La colle pour le carrelage et la dispersion silicone aqueuse permettant d'obtenir la membrane élastomère silicone étanche, sont telles que définies dans la description ci-dessus.

Grâce aux modalités opératoires et aux produits proposés conformément à l'invention, la réalisation d'un revêtement de surface étanche peut s'effectuer rapidement, aisément et avec une garantie de bonne adhérence et de maintien de l'étanchéité dans le temps, sans entraîner d'écotoxicité et en permettant le lavage à l'eau facile des outils utilisés pour l'application.

Cette dernière est de surcroît envisageable même en présence d'eau apparaissant seulement trois heures après l'enduction du film silicone élastomère étanche en cours de durcissement/réticulation.

L'invention sera mieux comprise et ses avantages ressortiront bien des exemples qui suivent et qui décrivent la préparation de la dispersion silicone aqueuse mise en oeuvre dans le procédé pour obtenir la membrane élastomère silicone étanche. Ces exemples exposent également un cas concret de réalisation d'un revêtement de surface étanche à l'aide de la dispersion silicone aqueuse sus-visée d'une colle additivée par un promoteur d'adhérence et d'une couverture extérieure de type carrelage.

**<u>Exemple 1:</u>**

Préparation d'une dispersion silicone aqueuse (ABCDEFGH) réticulable et obtention d'une membrane élastomère silicone étanche à l'aide de cette dispersion.

Dans un mélangeur à ancre de 21, on charge -A- 347.7 g d'huile polydiméthylsiloxane $\alpha$, $\omega$ hydroxylée de viscosité 135000 mPa.s, -A'- 26.2 g d'huile polydiméthylsiloxane bloquée par des groupements méthyle de viscosité 100 mPa.s, -B- 3.7g de résine MDT hydroxylée de viscosité 1000 mPa.s (contenant 0,5% poids de groupements hydroxyles, 62% poids de motifs trifonctionnels, 24% poids de motifs di-fonctionnels et 14% poids de motifs mono fonctionnels), -F- 26.4 g de Rhodasurf ROX (solution aqueuse à 85% d'un alcool aliphatique en $C_{13}$ polyéthoxylé contenant environ 8 motifs oxyéthyle) et -H- 7.9 g d'eau déminéralisée.

On mélange à 100 tr/min jusqu'à obtention d'une émulsion H/E fine (diamètre moyen $\leq 0.6\mu m$).

On dilue avec -H- 8.2 g d'eau déminéralisée puis on ajoute, sous agitation à 100 tr/min, - D- 7.9 g de pigment précolor V5639 commercialisé par Wünsiedel prédispersé dans 9 g de polyacrylate de sodium - dispersant commercialisé par Coatex sous la dénomination Coatex P50 ou par Protex sous la dénomination Prox A11- et -C- 24.3 g d'une solution aqueuse à 77% poids d'une résine T(OH) aminée par des groupes aminopropyles commercialisés par WITCO sous la dénomination VS 142.

On disperse dans le mélange ainsi obtenu -D- 186.9 g de carbonate de combustion commercialisé par OMYA sous la dénomination BLR3 et 186.9 g de carbonate de précipitation commercialisé par SOLVAY sous la dénomination Socal 312, sous agitation à 100 tr/min.

Enfin, on introduit -G- 0.4 g d'antifongique puis -H- 9 g d'eau déminéralisée et -E-1.2 g d'une solution à 60% poids de dilaurate de dioctylétain, et on mélange sous vide (4600 Pa) sous une agitation modérée de 100 tr/min.

L'extrait sec d'une telle formule est 79%.

On prépare un film à l'aide d'une racle de 2.5mm que l'on remplit avec le produit désiré. Cette méthode permet

d'obtenir un film de 2 mm d'épaisseur (+/- 0.3).

On laisse réticuler le produit pendant 7 jours à 23°C et 50% d'humidité relative.

Les propriétés mécaniques obtenues sur ce film de 2 mm dans de telles conditions, sont les suivantes :

TABLEAU I

| | Membrane acrylique BAL-WP1 de l'art antérieur | Membrane élastomère silicone utilisée dans l'invention |
|---|---|---|
| Résistance à la rupture (MPa) (norme NF T 46-002) | 0.25 | 0.65 |
| Allongement à la rupture (%) (norme NF T 46-002) | 90 | 560 |
| Module à 100% (MPa) (norme NF T 46-002) | 0.20 | 0.32 |
| Dureté Shore A (norme NF T 51-109 | 38 | 20 |

La membrane élastomère silicone selon l'invention a des propriétés mécaniques nettement supérieures à la membrane d'étanchéification acrylique commercialisée par la Société BAL sous la dénomination BAL-WP 1 selon l'art antérieur.

**<u>Exemple 2 :</u>**

Dans un mélangeur à ancre de 21, on charge -A- 348.8 g d'huile polydiméthylsiloxane α, ω hydroxylée de viscosité 135000 mPa.s, -A'- 26.3 g d'huile polydiméthylsiloxane bloquée par des groupements méthyle de viscosité 100 mPa.s, -B- 3.8 g de résine MDT hydroxylée de viscosité 1000 mPa.s (contenant 0.5 % de groupements hydroxyles, 60% de motifs trifonctionnels, 25% de motifs difonctionnels et 15% de motifs mono fonctionnels), -F- 26.4 g de Rhodasurf ROX (solution aqueuse à 85% d'un alcool aliphatique en $C_{13}$ polyéthoxylé contenant environ 8 motifs oxyéthyle et H- 7.9 g d'eau déminéralisée).

On mélange à 100 tr/min jusqu'à obtention d'une émulsion H/E fine (diamètre moyen ≤ 0.6μm).

On dilue avec -H- 8.25 g d'eau déminéralisée puis on ajoute, sous agitation à 100 tr/min, -D- 4.9 g de pigment précolor V5672 commercialisé par Wünsiedel prédispersé dans 9 g de polyacrylate de sodium - dispersant commercialisé par Coatex sous la dénomination Coatex P50 ou par Protex sous la dénomination Prox A11 - et -C- 24.4 g d'une solution aqueuse à 77% poids d'une résine T(OH) aminée par des groupes aminopropyles commercialisée par WITCO sous la dénomination VS 142.

On disperse -D- 187.5 g de carbonate de combustion commercialisé par OMYA sous la dénomination BLR3 et 187.5 g de carbonate de précipitation commercialisé par SOLVAY sous la dénomination Socal 312, sous agitation à 100 tr/min.

Enfin, on introduit -G- 0.4 g d'antifongique puis -H- 9 g d'eau déminéralisée et -E- 1.2 g d'une solution à 60% de dilaurate de dioctylétain, et on mélange sous vide (46 mbar) sous une agitation modérée de 100 tr/min.

L'extrait sec d'une telle formule est 79%.

Les propriétés mécaniques obtenues sur un film de 2 mm de ce produit dans les mêmes conditions que l'exemple 1 sont les suivantes :

TABLEAU II

| | **Membrane élastomère silicone utilisée dans l'invention** |
|---|---|
| Résistance à la rupture (MPa) (norme NF T 46-002) | 0.63 |
| Allongement à la rupture (%) (norme NF T 46-002) | 550 |

(suite)

| | Membrane élastomère silicone utilisée dans l'invention |
|---|---|
| Module à 100% (MPa) (norme NF T 46-002) | 0.34 |
| Dureté Shore A (norme NF T 51-109) | 22 |

**Exemple 3 :**

Sur une plaque de béton de dimensions 75x50x20 mm, on applique à l'aide d'un pinceau environ 0.1 g d'un primaire d'adhérence constitué par une solution de résine polyméthylsiloxane dans le toluène commercialisé par WITCO sous la dénomination Silquest AP 134. Après un séchage de 30 minutes, on dépose la dispersion silicone aqueuse préparée à l'exemple 1 à l'aide d'un pinceau. La consommation, par couche, peut varier de 600 à 1000 g/$m^2$ suivant la porosité, la rugosité du support et suivant la nature des parties à traiter. En l'occurrence, le taux de dépôt est de 800 g/$m^2$. On laisse sécher 24 h dans un environnement à 23°C et 50% d'humidité relative, puis on applique la colle à carrelage additivée à 8% d'un promoteur d'adhérence (C') constitué par une solution aqueuse à 77% poids d'une résine T(OH) aminée par des groupes aminopropyles commercialisée par WITCO sous la dénomination VS 142 sur laquelle on dépose le carrelage de dimensions 50x50 mm.

Préparation et application de la colle :

Dans 100 g de base pour colle commercialisée par la Société BAL sous la dénomination BAL-SINGLE PART FLEXIBLE, on ajoute 10 g d'une solution aqueuse à 77% poids d'une résine T(OH) aminée par des groupes aminopropyl commercialisée par WITCO sous la dénomination VS 142 et 8 g d'eau.

On dépose une couche d'environ 2 à 6 mm de colle à l'aide d'une spatule (crantée ou non), ce qui représente 5 à 6 kg/$m^2$.

On laisse sécher l'ensemble 48 h dans une salle conditionnée à 23°C et 50% d'humidité relative puis on mesure la force d'arrachage du carreau. Pour ce faire, on utilise un dynamomètre possédant des mâchoires capables de maintenir des éprouvettes de telles dimensions. On colle sur le carrelage une plaque d'aluminium anodisé de manière à pouvoir imposer une force de traction au système. La vitesse de traction est de 5.5mm/min (d'après la norme ISO 8339).

La force mesurée est de 0.6Mpa, supérieure à la force requise de 0.5 MPa.

**Exemple 4 :**

Sur une plaque de béton de dimensions 75x50x20 mm, on applique à l'aide d'un pinceau environ 0.1 g d'un primaire d'adhérence constitué par une solution de résine polyméthylsiloxane dans le toluène commercialisé par WITCO sous la dénomination Silquest AP 134. Après un séchage de 30 minutes, on dépose la dispersion silicone aqueuse préparée à l'exemple 1 à l'aide d'un pinceau. La consommation, par couche, peut varier de 600 à 1000 g/$m^2$ suivant la porosité, la rugosité du support et suivant la nature des parties à traiter. En l'occurrence, le taux de dépôt est de 800 g/$m^2$. On laisse sécher 24 h dans un environnement à 23°C et 50% d'humidité relative.

On place ce système sous une colonne d'eau de 220 mm de hauteur et de 10 mm de diamètre pendant 5 jours. On observe le mouvement du niveau de l'eau dans la colonne après ce conditionnement.

Le niveau de l'eau dans la colonne n'a pas baissé en 5 jours; ceci signifie que la membrane polymère offre une bonne étanchéité.

## Revendications

**1.** Procédé de réalisation d'un revêtement de surface étanche, pour bâtiment (sol/mur/plafond), du type de ceux consistant à fixer sur la surface une superposition de couches ou d'éléments comprenant, à partir de la surface :

→ éventuellement au moins une couche de primaire d'adhérence,
→ au moins une membrane polymère étanche à l'eau,
→ (éventuellement au moins une nappe de matériau fibreux tissé ou non,)

→ au moins une couche de colle,
→ au moins une couverture extérieure ;

**caractérisé en ce que** :

a. la membrane étanche est sélectionnée parmi celles susceptibles d'être obtenues à partir d'une dispersion aqueuse d'huile(s) silicone comprenant :

- **A-** 100 parties en poids d'au moins une huile organopolysiloxane (A) susceptible de réticuler par condensation, si nécessaire en présence d'un agent de réticulation (B), en un élastomère ;
- **A'-** éventuellement jusqu'à 30 parties en poids d'au moins une huile organopolysiloxane non réactive ;
- **B-** si nécessaire, de 0,1 à 100 parties en poids d'au moins un agent de réticulation (B) ;
- **C-** éventuellement, jusqu'à 50 parties en poids d'au moins un promoteur d'adhérence (C) ;
- **D-** jusqu'à 200 parties en poids sec d'au moins une charge (D) ;
- **E-** une quantité catalytiquement efficace d'un composé catalytique de durcissement (E) pouvant aller jusqu'à 3 parties en poids ;
- **F-** au moins un émulsifiant (F) ;
- **G-** éventuellement au moins un additif fonctionnel (G) ;
- **H-** et de l'eau ;

b. la colle mise en oeuvre comprend au moins un promoteur d'adhérence (C') ;
c. la dispersion aqueuse d'huile(s) silicone est appliquée en film sur la surface ;
d. la réticulation du film silicone intervient ensuite, de préférence à température ambiante ;
e. il est alors procédé à l'application d'au moins une couche de colle additivée avec le promoteur d'adhérence C', de préférence par enduction sur le film silicone réticulé ;
f. puis enfin la couverture extérieure est posée.

**2.** Procédé selon la revendication 1, **caractérisé en ce que** la quantité de promoteur d'adhérence (C') dans la colle est inférieure à 20 % en poids, de préférence comprise entre 0,1 et 15 % en poids, et plus préférentiellement encore entre 0,5 et 10 % en poids.

**3.** Procédé selon la revendication 1 ou 2, **caractérisé en ce que** la colle mise en oeuvre est préparée par mélange d'une partie poudre et d'un liquide dispersant, de préférence de l'eau, et **en ce que** le promoteur d'adhérence (C') est incorporé dans le liquide dispersant.

**4.** Procédé selon l'une quelconque des revendications 1 à 3, **caractérisé en ce que** la colle mise en oeuvre a la composition suivante (en parties en poids):

• ciment hydraulique 100
• liant minéral avec additif(s) organique(s) ou inorganique(s) 100-300
de préférence 170-200
• promoteur d'adhérence (C') 1-50
de préférence 20-40
• eau 20-100
de préférence 40-80

**5.** Procédé selon l'une quelconque des revendications 1 à 4, **caractérisé en ce que** le liant minéral comprend au moins un composé sélectionné dans le groupe incluant : les sables siliceux, les dérivés cellulosiques, les charges calcaires, les résines acryliques en dispersion, les adjuvants spécifiques et leurs mélanges.

**6.** Procédé selon l'une quelconque des revendications 1 à 5, **caractérisé en ce que** le promoteur d'adhérence (C') est identique à (C).

**7.** Procédé selon l'une quelconque des revendications 1 à 6, **caractérisé en ce que** le promoteur d'adhérence (C) et/ou (C') est un composé hydrosoluble capable de se dissoudre dans l'eau à une température de 25°C à hauteur d'au moins 5 % en poids et choisi parmi les silanes et/ou les POS hydroxylés et porteurs, par molécule d'au moins un hydroxyle et d'au moins une fonction hydrophile d'ancrage sur support (Fas), ainsi que parmi les mélanges de ces produits, lesdites fonctions Fas identiques ou différentes entre elles étant, de préférence; sélectionnées dans

le groupe comprenant les fonctions: amino, époxy, acrylo, méthacrylo, uréido, mercapto, thiol, chloroalkyle.

**8.** Procédé selon l'une quelconque des revendications 1 à 7, **caractérisé en ce que** le promoteur d'adhérence (C) et/ou (C') est :

- un polydiorganosiloxane hydroxylé linéaire à motifs siloxyles D et/ou MD et/ou une résine POS hydroxylée comprenant des motifs siloxyles T et éventuellement M et/ou D et/ou Q ou bien encore des motifs siloxyles Q et M et/ou D et/ou T, de préférence une résine sélectionnée parmi celles du type T(OH), DT(OH), DQ(OH), DT (OH), MQ(OH), MDT(OH), MDQ(OH) ou les mélanges de celles-ci ;
- et/ou un silane ayant pour formule :

$$(R^5)c\ Si\ (R)_{4-c}$$

formule dans laquelle :

- c est 0 ; 1 ou 2
- les radicaux $R^5$, identiques ou différents, correspondent aux radicaux $R^3$ et $R^4$ de l'huile (A) de formule (I)
- le radical R correspond au groupe OH de l'huile polyorganosiloxane (A) de formule (I) ;

de préférence, l'aminopropyltriéthoxysilane, l'aminopropyl-méthyldiéthoxysilane, le glycidoxypropyl-triméthoxysilane.

**9.** Procédé selon l'une quelconque des revendications 1 à 8, **caractérisé en ce que** le les huiles (A) ont pour formule générique (I) :

**(I)**

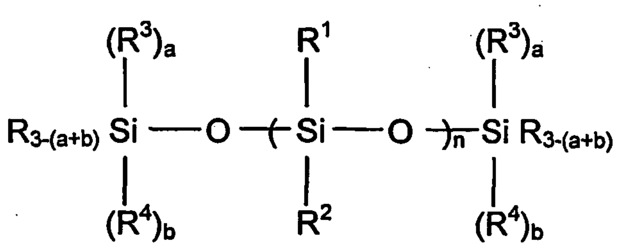

formule dans laquelle :

- a est 0 ou 1
- b est 0 ou 1
- avec a+b=0; 1ou2
- n a une valeur suffisante pour conférer au polymère de formule (a) la viscosité désirée
- les radicaux R sont identiques ou différents et représentent
  - un groupe OH avec a+b = 2 ;
  - un groupe alcoxy ou alcényloxy contenant de 1 à 10 atomes de carbone ;
  - un groupe aryloxy contenant de 6 à 13 atomes de carbone ;
  - un groupe acyloxy contenant de 1 à 13 atomes de carbone;
  - un groupe cétiminoxy contenant de 1 à 8 atomes de carbone ;
  - un groupe amino- ou amido-fonctionnel contenant de 1 à 6 atomes de carbone, liés au silicium par une liaison Si-N ;
- les radicaux $R^1$ et $R^2$ sont identiques ou différents et représentent des groupes organiques aliphatiques alkyle, alcényle, ayant de 1 à 10 atomes de carbone, aromatiques phenyle, lesdits groupes étant éventuellement substitués par des atomes d'halogènes ou des groupes cyano ;
- les radicaux $R^3$ et $R^4$ sont identiques ou différents et représentent des groupes organiques aliphatiques alkyle, aminoalkyle, polyaminoalkyle, époxyalkyle, alcényle, contenant de 1 à 13 atomes de carbone, aromatiques aryle contenant de 6 à 13 atomes de carbone ;

de préférence, au moins 80 % des radicaux $R^1$ à $R^4$ représentant un groupe méthyle

au moins 2 groupes fonctionnels condensables éventuellement après hydrolyse étant présents par molécule,

**en ce que** :

le promoteur d'adhérence (C) joue le rôle de réticulant seul ou en complément de l'agent de réticulation (B) formé par :

du silicate de soude, un organosiliconate de métal alcalin, une microémulsion de résine silsesquioxane, une résine silicone réactive de faible masse moléculaire présentant des groupes alcoxy et acyloxy, une résine silicone de haute masse insoluble dans le toluène, au moins une résine silicone hydroxylée présentant, par molécule, au moins deux motifs siloxyles différents choisis parmi ceux de type M, D, T et Q ; l'un au moins étant un T ou un Q ;, un alcoxysilane, un alkylaminosilane, un alkylamidosilane; siliconates, silicates, silices (en poudre ou colloïdales);
et **en ce que** :

le composé catalytique de durcissement (E) est un dérivé de l'étain, mis en oeuvre selon des quantités pouvant aller de 0,05 à 1 partie en poids pour 100 parties d'huile (A).

**10.** Procédé selon l'une quelconque des revendications 1 à 9, **caractérisé en ce que** la couverture extérieure est choisie parmi les carrelages, de préférence parmi les carrelages à base d'argile, de terre cuite, de quartz blanc, d'adjuvants inorganiques de résine (liant de poudre de marbre, de ciment, de sable, de grès, de faïence et/ou de pigments).

**11.** Procédé selon l'une quelconque des revendications 1 à 10, **caractérisé en ce que** la surface est en bois et **en ce que** la superposition ne comprend pas de primaire.

**12.** Colle pour revêtement de surfaces étanche de bâtiment (sol/mur/ plafond) susceptible d'être utilisée pour la mise en oeuvre du procédé selon l'une quelconque des revendications 1 à 11, **caractérisée en ce qu'**elle comprend au moins un promoteur d'adhérence (C') et que la colle mise en oeuvre a la composition suivante (en parties de poids):

- ciment hydraulique 100
- liant minerai avec additive(s) organique(s) ou inorganique(s) 100-300
  de préférence 170-200
- promoteur d'adhérence (C') 1-50
  de préférence 20-40
- eau 20-100
  de préférence 40-80

et que ce promoteur d'adhérence (C') est un composé hydrosoluble capable de se dissoudre dans l'eau à une température de 25°C à hauteur d'au moins 5 % en poids et choisi parmi les silanes et/ou les POS hydroxylés et porteurs, par molécule d'au moins un hydroxyle et d'au moins une fonction hydrophile d'ancrage sur support (Fas), ainsi que parmi les mélanges de ces produits, lesdites fonctions Fas sont identiques ou différentes entre elles.

**13.** Colle pour revêtement de surfaces étanche de bâtiment selon la revendication 12, telle que définie dans l'une quelconque des revendications 1 à 8.

**14.** Colle pour carrelages selon la revendication 13.

**15.** Kit prêt à l'emploi pour la mise en oeuvre du procédé selon l'une quelconque des revendications 1 à 11, **caractérisé en ce qu'**il comporte notamment:

• éventuellement au moins une composition de primaire d'adhérence,
• au moins une dispersion aqueuse d'huile(s) silicone comprenant :

- **A-** 100 parties en poids d'au moins une huile organopolysiloxane (A) susceptible de réticuler par condensation, si nécessaire en présence d'un agent de réticulation (B), en un élastomère ;
- **A'-** éventuellement jusqu'à 30 parties en poids d'au moins une huile organopolysiloxane non réactive ;
- **B-** si nécessaire, de 0,1 à 100 parties en poids d'au moins un agent de réticulation (B) ;
- **C-** éventuellement, jusqu'à 50 parties en poids d'au moins un promoteur d'adhérence (C) ;

- **D-** jusqu'à 200 parties en poids sec d'une charge (D) ;
- **E-** une quantité catalytiquement efficace d'un composé catalytique de durcissement (E) pouvant aller jusqu'à 3 parties en poids ;
- **F-** au moins un émulsifiant (F) ;
- **G-** éventuellement au moins un additif fonctionnel (G) ;
- **H-** eau ;

ladite dispersion permettant d'obtenir après enduction sur un support et réticulation, une membrane étanche ;

• au moins une colle telle que définie dans la revendication 13 ou 14
• et éventuellement au moins une couverture extérieure.

**16.** Utilisation :

- d'une dispersion aqueuse d'huile silicone comprenant :

  - **A-** 100 parties en poids d'au moins une huile organopolysiloxane (A) susceptible de réticuler par condensation, si nécessaire en présence d'un agent de réticulation (B), en un élastomère ;
  - **A'-** éventuellement jusqu'à 30 parties en poids d'au moins une huile organopolysiloxane non réactive ;
  - **B-** si nécessaire, de 0,1 à 100 parties en poids d'au moins un agent de réticulation (B) ;
  - **C-** éventuellement, jusqu'à 50 parties en poids d'au moins un promoteur d'adhérence (C) ;
  - **D-** jusqu'à 200 parties en poids sec d'une charge (D) ;
  - **E-** une quantité catalytiquement efficace d'un composé catalytique de durcissement (E) pouvant aller jusqu'à 3 parties en poids ;
  - **F-** au moins un émulsifiant (F) ;
  - **G-** éventuellement au moins un additif fonctionnel (G) ;
  - **H-** et de l'eau ;

- et d'une colle de la couverture extérieure (par exemple carrelages) comprenant au moins un promoteur d'adhérence (C') tel que défini ci-dessus ;

pour la réalisation d'un revêtement de surfaces étanche, pour bâtiment (sol/mur/plafond), ledit revêtement étant constitué d'une superposition comprenant à partir de la surface à revêtir :

→ éventuellement au moins une couche de primaire d'adhérence,
→ au moins une membrane polymère étanche à l'eau,
→ (éventuellement au moins une nappe de matériau fibreux tissé ou non),
→ au moins une couche de colle,
→ au moins une couverture extérieure.

## Claims

**1.** A method of producing an impermeable surface coating for building (floors/walls/ceilings), of the type of those comprising fixing, to the surface, a superposition of layers or of elements comprising, starting from the surface:

➢ optionally, at least one layer of adhesion primer,
➢ at least one water-impermeable polymeric membrane,
➢ (optionally, at least one sheet of woven or nonwoven fibrous material),
➢ at least one layer of adhesive,
➢ at least one external covering;

**characterized in that**

a. the impermeable membrane is selected from those that can be obtained from an aqueous dispersion of silicone oil(s) comprising:

- A- 100 parts by weight of at least one organopolysiloxane oil (A) that can crosslink by condensation to

form an elastomer, if necessary in the presence of a crosslinking agent (B);
- A'- optionally, up to 30 parts by weight of at least one unreactive organopolysiloxane oil;
- B- if necessary, from 0.1 to 100 parts by weight of at least one crosslinking agent (B);
- C- optionally, up to 50 parts by weight of at least one adhesion promoter (C);
- D- up to 200 parts by dry weight of at least one filler (D);
- E- a catalytically effective amount of a catalytic curing compound (E), possibly in up to three parts by weight;
- F- at least one emulsifier (F);
- G- optionally, at least one functional additive (G)
- H- and water;

b. the employed adhesive comprises at least one adhesion promoter (C');
c. a film of the aqueous dispersion of silicone oil(s) is applied onto the surface;
d. the silicone film subsequently crosslinks, preferably at room temperature;
e. at least one layer of adhesive that comprises the adhesion promoter C' as an additive is then applied, preferably by coating, onto the crosslinked silicone film;
f. then finally the external covering is laid.

2. The method according to claim 1, **characterized in that** the amount of adhesion promoter (C') in the adhesive is less than 20% by weight, preferably comprised between 0.1 and 15 % by weight, and still more preferably between 0.5 and 10 % by weight.

3. The method according to claim 1 or 2, **characterized in that** the employed adhesive is prepared by mixing a powder part with a liquid dispersant, preferably water, and wherein the adhesion promoter (C') is incorporated into the liquid dispersant.

4. The method according to one of claims 1 to 3, **characterized in that** the adhesive used has the following composition (in parts by weight):

• hydraulic cement 100
• mineral binder with organic or inorganic additive(s) 100-300
  preferably 170-200
• adhesion promoter (C') 1-50
  preferably 20-40
• water 20-100
  preferably 40-80

5. The method according to one of claims 1 to 4, **characterized in that** the mineral binder comprises at least one compound selected from the group comprising: siliceous sands, cellulose derivatives, calcareous fillers, acrylic resins in dispersion, specific auxiliaries and mixtures thereof.

6. The method according to one of claims 1 to 5, **characterized in that** the adhesion promoter (C') is identical to (C).

7. The method according to one of claims 1 to 6, **characterized in that** the adhesion promoter (C) and/or (C') is a water-soluble compound capable of being dissolved in water at a temperature of 25 °C in an amount of at least 5 % by weight, and selected from silanes and/or hydroxylated POSs carrying, per molecule, at least one hydroxyl group and at least one substrate-anchoring hydrophilic functional group (Saf), as well as from mixtures of these products, said Saf functional groups, which are identical or different from one another, being preferably selected from the group comprising the functional groups: amino, epoxy, acrylo, methacrylo, ureido, mercapto, thiol and chloroalkyl.

8. The method according to one of claims 1 to 7, **characterized in that** the adhesion promoter (C') and/or (C) is:

• a linear hydroxylated polydiorganosiloxane having D and/or MD siloxyl units and/or a hydroxylated POS resin comprising T and optionally M and/or D and/or Q siloxyl units or else Q and M and/or D and/or T siloxyl units, preferably a resin selected from among those of the type T(OH), DT(OH), DQ(OH), DT(OH), MQ(OH), MDT(OH), MDQ(OH) or mixtures thereof;
• and/or a silane of the Formula:

$(R^5)_cSi(R)_{4-c}$

in which:

- c is 0, 1 or 2
- the groups $R^5$, identical or different, correspond to the groups $R^3$ and $R^4$ of the oil (A) of Formula (I)
- the group R corresponds to the group OH of the polyorganosiloxane oil (A) of Formula (I);

preferably aminopropyltriethoxysilane, aminopropylmethyldiethoxysilane, glycidoxypropyltrimethoxysilane.

**9.** The method according to one of claims 1 to 8, **characterized in that** the oils (A) have the generic Formula (I):

(I)

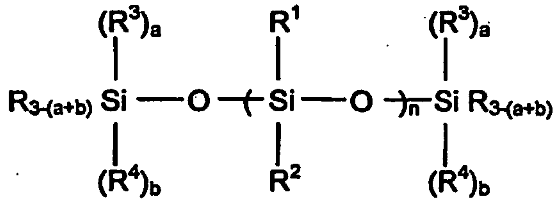

in which:

- a is 0 or 1
- b is 0 or 1
- with a+b = 0, 1 or 2
- n is sufficiently large so as to confer the desired viscosity to the polymer of Formula (a)
- the groups R are identical or different and represent

  ■ an OH group with a+b = 2;
  ■ an alkoxy or alkenyloxy group containing 1 to 10 carbon atoms;
  ■ an aryloxy group containing 6 to 13 carbon atoms;
  ■ an acyloxy group containing 1 to 13 carbon atoms;
  ■ a ketiminoxy group containing 1 to 8 carbon atoms;
  ■ an amino or amido functional group containing 1 to 6 carbon atoms bonded to silicon though an Si-N bond;

- the $R^1$ and $R^2$ groups are identical or different and represent alkyl, alkenyl, aliphatic organic groups with 1 to 10 carbon atoms, aromatic phenyl groups, said groups being optionally substituted with halogen atoms or cyano groups;
- the $R^3$ and $R^4$ groups are identical or different and represent alkyl, aminoalkyl, polyaminoalkyl, epoxyalkyl, alkenyl aliphatic organic groups comprising 1 to 13 carbon atoms, aryl aromatic groups comprising 6 to 13 carbon atoms;
preferably, at least 80 % of the $R^1$ to $R^4$ groups represent a methyl group
at least 2 functional groups per molecule which can condense, optionally after hydrolysis,

**in that**:

the adhesion promoter (C) acts as the crosslinking agent alone or together with the crosslinking agent (B), formed by:

sodium silicate, an alkali metal organosiliconate, a silsesquioxane resin microemulsion, a reactive low molecular mass silicone resin having alkoxy and acyloxy groups, a toluene-insoluble high molecular mass silicone resin, at least one hydroxylated silicone resin having, per molecule, at least two different siloxyl units selected from those of the M, D, T and Q type; at least one being a T or a Q; an alkoxysilane, an alkylaminosilane, an alkylamidosilane; siliconates, silicates and silicas (in powder or colloidal form);

and **in that**:

the catalytic curing compound (E) is a tin derivative, used in amounts of 0.05 to 1 part by weight per 100 parts of oil (A).

**10.** The method according to one of claims 1 to 9, **characterized in that** the external covering is selected from tiles, preferably from tiles based on clay, terracotta, white quartz, inorganic resin auxiliaries (powder binder of marble, cement, sand, sandstone, earthenware and/or pigments).

**11.** The method according to one of claims 1 to 10, **characterized in that** the surface is of wood and **in that** the superposition does not comprise primer.

**12.** An adhesive for impermeable coating of building surfaces (floors/walls/ceilings) able to be used for the implementation of the method according to one of claims 1 to 11, **characterized in that** it comprises at least one adhesion promoter (C') and **in that** the employed adhesive has the following composition (in parts by weight):

- hydraulic cement 100
- mineral binder with organic or inorganic additive(s) 100-300
  preferably 170-200
- adhesion promoter (C') 1-50
  preferably 20-40
- water 20-40
  preferably 40-80

and **in that** said adhesion promoter (C') is a water-soluble compound capable of being dissolved in water at a temperature of 25 °C in an amount of at least 5 % by weight, and selected from silanes and/or hydroxylated POSs and carrying, per molecule, at least one hydroxyl group and at least one substrate-anchoring hydrophilic functional group (Saf), as well as from mixtures of these products, said Saf functional groups, which are identical or different from one another.

**13.** The adhesive for impermeable coating of building surfaces according to claim 12, as defined in one of claims 1 to 8.

**14.** The adhesive for tiles according to claim 13.

**15.** Ready for use kit for implementing the method according to one of claims 1 to 11, **characterized in that** it comprises notably:

• optionally, at least one adhesion primer composition,
• at least one aqueous dispersion of silicone oil(s), comprising:

- A-100 parts by weight of at least one organopolysiloxane oil (A) that can crosslink by condensation to form an elastomer, if necessary in the presence of a crosslinking agent (B);
- A'- optionally, up to 30 parts by weight of at least one unreactive organopolysiloxane oil;
- B- if necessary, from 0.1 to 100 parts by weight of at least one crosslinking agent (B);
- C- optionally, up to 50 parts by weight of at least one adhesion promoter (C);
- D- up to 200 parts by dry weight of a filler (D);
- E- a catalytically effective amount of a catalytic curing compound (E), possibly in up to 3 parts by weight;
- F- at least one emulsifier (F);
- G- optionally, at least one functional additive (G);
- H- water;

said dispersion making it possible to obtain, after coating on a substrate and crosslinking, an impermeable membrane;

• at least one adhesive as defined in claim 13 or 14
• and optionally at least one external covering.

**16.** Use:

- of an aqueous dispersion of silicone oil comprising:

- A- 100 parts by weight of at least one organopolysiloxane oil (A) that can crosslink by condensation to form an elastomer, if necessary in the presence of a crosslinking agent (B);
- A'- optionally, up to 30 parts by weight of at least one unreactive organopolysiloxane oil;
- B- if necessary, from 0.1 to 100 parts by weight of at least one crosslinking agent (B);
- C- optionally, up to 50 parts by weight of at least one adhesion promoter (C);
- D- up to 200 parts by dry weight of a filler (D);
- E- a catalytically effective amount of a catalytic curing compound (E), possibly in up to 3 parts by weight;
- F- at least one emulsifier (F);
- G- optionally, at least one functional additive (G);
- H- and water;
- and of an adhesive for the external covering (for example tiles) comprising at least one adhesion promoter (C') as defined above;

for constructing an impermeable surface coating for building (floors/walls/ceilings), said coating consisting of a superposition comprising, starting from the surface to be covered:

➢ optionally, at least one layer of adhesion primer,
➢ at least one water-impermeable polymeric membrane,
➢ (optionally, at least one sheet of woven or nonwoven fibrous material),
➢ at least one layer of adhesive,
➢ at least one external covering.

## Patentansprüche

**1.** Verfahren zur Herstellung einer dichten Oberflächenbeschichtung für Gebäude (Fußboden/Wand/Decke) der Art, die darin besteht, eine Überlagerung von Schichten oder Elementen auf die Oberfläche aufzubringen, wobei die Überlagerung ausgehend von der Oberfläche Folgendes umfasst:

➢ gegebenenfalls mindestens eine Haftunterschicht,
➢ mindestens eine wasserdichte Polymermembran,
➢ (gegebenenfalls mindestens eine Lage aus einem Web- oder Vliesfaser material),
➢ mindestens eine Klebstoffschicht,
➢ mindestens eine äußere Deckschicht;

**dadurch gekennzeichnet, dass**:

a. die dichte Membran aus denen ausgewählt ist, die aus einer wässrigen Dispersion von Silikonöl(en) erhalten werden können, die Folgendes umfasst:

- A- 100 Gewichtsteile mindestens eines Organopolysiloxanöls (A), das durch Kondensation zu einem Elastomer vernetzen kann, falls erforderlich in Anwesenheit eines Vernetzungsmittels (B);
- A'- gegebenenfalls bis zu 30 Gewichtsteile mindestens eines nicht reaktionsfähigen Organopolysiloxanöls;
- B- falls erforderlich, 0,1 bis 100 Gewichtsteile mindestens eines Vernetzungsmittels (B);
- C- gegebenenfalls bis zu 50 Gewichtsteile mindestens eines Haftvermittlers (C);
- D- bis zu 200 Gewichtsteile im Trockenzustand mindestens eines Füllstoffs (D);
- E- eine katalytisch wirksame Menge einer katalytischen Härterverbindung (E), die bis zu 3 Gewichtsteile ausmachen kann;
- F- mindestens einen Emulgator (F);
- G- gegebenenfalls mindestens ein funktionelles Additiv (G);
- H- und Wasser;

b. der eingesetzte Klebstoff mindestens einen Haftvermittler (C') umfasst;
c. die wässrige Dispersion von Silikonöl(en) als Film auf die Oberfläche aufgetragen wird;
d. die Vernetzung des Silikonfilms anschließend erfolgt, vorzugsweise bei Umgebungstemperatur;
e. dann das Auftragen mindestens einer Klebstoffschicht, der der Haftvermittler C' zugesetzt wurde, durchgeführt wird, vorzugsweise durch Beschichtung auf den vernetzten Silikonfilm;
f. dann schließlich die äußere Deckschicht aufgebracht wird.

**2.** Verfahren nach Anspruch 1, **dadurch gekennzeichnet, dass** die Menge des Haftvermittlers (C') in dem Klebstoff weniger als 20 Gew.-%, vorzugsweise zwischen 0,1 und 15 Gew.-% und noch mehr bevorzugt zwischen 0,5 und 10 Gew.-% ausmacht.

**3.** Verfahren nach Anspruch 1 oder 2, **dadurch gekennzeichnet, dass** der eingesetzte Klebstoff durch Mischen eines Pulverteils und eines flüssigen Dispersionsmittels, vorzugsweise Wasser, hergestellt wird und dass der Haftvermittler (C') in das flüssige Dispersionsmittel eingearbeitet wird.

**4.** Verfahren nach einem der Ansprüche 1 bis 3, **dadurch gekennzeichnet, dass** der eingesetzte Klebstoff die folgende Zusammensetzung aufweist (in Gewichtsteilen):

- Hydraulischer Zement 100
- Mineralischer Binder mit organischen oder anorganischen Additiven 100-300
  vorzugsweise 170-200
- Haftvermittler (C') 1-50
  vorzugsweise 20-40
- Wasser 20-100
  vorzugsweise 40-80

**5.** Verfahren nach einem der Ansprüche 1 bis 4, **dadurch gekennzeichnet, dass** der mineralische Binder mindestens eine Verbindung umfasst, die aus der Gruppe bestehend aus: Quarzsänden, Cellulosederivaten, Kalkfüllstoffen, dispergierten Acrylharzen, spezifischen Zusatzmitteln und deren Gemischen ausgewählt ist.

**6.** Verfahren nach einem der Ansprüche 1 bis 5, **dadurch gekennzeichnet, dass** der Haftvermittler (C') mit (C) identisch ist.

**7.** Verfahren nach einem der Ansprüche 1 bis 6, **dadurch gekennzeichnet, dass** der Haftvermittler (C) und/oder (C') eine wasserlösliche Verbindung ist, die sich in Wasser mit einer Temperatur von 25 °C in einer Menge von mindestens 5 Gew.-% lösen kann und aus Silanen und/oder Hydroxy-POS, die pro Molekül mindestens ein Hydroxy und mindestens eine hydrophile Funktion zur Verankerung am Träger (Fas-Funktion) tragen, sowie Gemischen dieser Produkte ausgewählt ist, wobei diese untereinander identischen oder verschiedenen Fas-Funktionen vorzugsweise aus der Gruppe ausgewählt sind, die die folgenden Funktionen umfasst: Amino, Epoxy, Acryl, Methacryl, Ureido, Mercapto, Thiol, Chloralkyl.

**8.** Verfahren nach einem der Ansprüche 1 bis 7, **dadurch gekennzeichnet, dass** der Haftvermittler (C) und/oder (C'):

- ein lineares Hydroxypolyorganosiloxan mit Siloxyl-D- und/oder -MD-Motiven und/oder ein Hydroxy-POS-Harz, das Siloxyl-T- und gegebenenfalls -Mund/oder -D- und/oder -Q-Motive oder auch Siloxyl-Q- und -M- und/oder -D- und/oder -T-Motive umfasst, vorzugsweise ein Harz, das aus denen des T(OH)-, DT(OH)-, DQ(OH)-, DT (OH)-, MQ(OH)-, MDT(OH)-, MDQ(OH)-Typs oder Gemischen dieser ausgewählt ist;
- und/oder ein Silan mit der Formel:

$$(R^5)_cSi(R)_{4-c}$$

in der:

- $\underline{c}$ 0, 1 oder 2 ist,
- die Reste $R^5$, die identisch oder verschieden sind, den Resten $R^3$ und $R^4$ des Öls (A) der Formel (I) entsprechen,
- der Rest R der OH-Gruppe des Polyorganosiloxanöls (A) der Formel (I) entspricht;

vorzugsweise Aminopropyltriethoxysilan, Aminopropylmethyldiethoxysilan, Glycidoxypropyltrimethoxysilan ist.

**9.** Verfahren nach einem der Ansprüche 1 bis 8, **dadurch gekennzeichnet, dass** die Öle (A) die allgemeine Formel (I) aufweise:

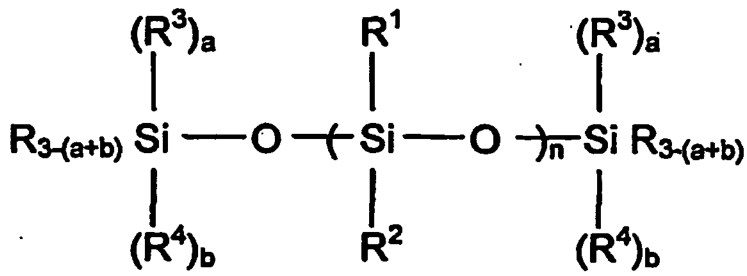

in der:

- a 0 oder 1 ist,
- b 0 oder 1 ist,
- wobei a+b = 0, 1 oder 2,
- n einen Wert aufweist, der ausreicht, um dem Polymer der Formel (a) die gewünschte Viskosität zu verleihen,
- die Reste R identisch oder verschieden sind und für

  • eine OH-Gruppe, wobei a+b = 2;
  • eine Alkoxy- oder Alkenyloxygruppe, die 1 bis 10 Kohlenstoffatome enthält;
  • eine Aryloxygruppe, die 6 bis 13 Kohlenstoffatome enthält;
  • eine Acyloxygruppe, die 1 bis 13 Kohlenstoffatome enthält;
  • eine Ketiminoxygruppe, die 1 bis 8 Kohlenstoffatome enthält;
  • eine amino- oder amidofunktionelle Gruppe, die 1 bis 6 Kohlenstoffatome enthält, die durch eine Si-N-Bindung mit Silicium verbunden sind, stehen;

wobei vorzugsweise mindestens 80 % der Reste $R^1$ bis $R^4$ für eine Methylgruppe stehen,
wobei mindestens 2 funktionelle Gruppen, die gegebenenfalls nach einer Hydrolyse kondensiert werden können, pro Molekül vorliegen,
dass:

der Haftvermittler (C) die Rolle des alleinigen oder zu dem Vernetzungsmittel (B) zusätzlichen Vernetzers spielt, der von Folgendem gebildet wird:

Natriumsilikat, einem Alkalimetallorganosilikonat, einer Mikroemulsion eines Silsesquioxanharzes, einem reaktionsfähigen Silikonharz mit niedrigem Molekulargewicht, das Alkoxy- und Acyloxygruppen aufweist, einem Silikonharz mit hohem Gewicht, das in Toluol unlöslich ist, mindestens einem Hydroxysilikonharz, das pro Molekül mindestens zwei unterschiedliche Siloxylmotive aufweist, die aus denen des M-, D-, T- und Q-Typs ausgewählt sind; wobei mindestens eines davon ein T- oder ein Q-Typ ist; einem Alkoxysilan, einem Alkylaminosilan, einem Alkylamidosilan; Silikonaten, Silikaten, Siliciumdioxiden (als Pulver oder kolloidal);

und dass:

die katalytische Härterverbindung (E) ein Zinnderivat ist, das in Mengen eingesetzt wird, die 0,05 bis 1 Gewichtsteil auf 100 Teile Öl (A) ausmachen können.

**10.** Verfahren nach einem der Ansprüche 1 bis 9, **dadurch gekennzeichnet, dass** die äußere Deckschicht aus Fliesen, vorzugsweise aus Fliesen auf Tonbasis, aus Terrakotta, weißem Quarz, anorganischen Harzzusatzstoffen (Marmorpulver-, Zement-, Sand-, Sandstein-, Fayence- und/oder Pigmentbinder) ausgewählt ist.

**11.** Verfahren nach einem der Ansprüche 1 bis 10, **dadurch gekennzeichnet, dass** die Oberfläche aus Holz ist und dass die Überlagerung keine Unterschicht umfasst.

**12.** Klebstoff zur Beschichtung von dichten Oberflächen eines Gebäudes (Fußboden/Wand/Decke), der zur Durchführung des Verfahrens nach einem der Ansprüche 1 bis 11 verwendet werden kann, **dadurch gekennzeichnet, dass** er mindestens einen Haftvermittler (C') umfasst und dass der Klebstoff mit der folgenden Zusammensetzung eingesetzt wird (in Gewichtsteilen):

- Hydraulischer Zement 100
- Mineralischer Binder mit organischen oder anorganischen Additiven 100-300
  vorzugsweise 170-200
- Haftvermittler (C') 1-50
  vorzugsweise 20-40
- Wasser 20-100
  vorzugsweise 40-80

und dass der Haftvermittler (C') eine wasserlösliche Verbindung ist, die sich in Wasser mit einer Temperatur von 25 °C in einer Menge von mindestens 5 Gew.-% lösen kann und aus Silanen und/oder Hydroxy-POS, die pro Molekül mindestens ein Hydroxy und mindestens eine hydrophile Funktion zur Verankerung am Träger (Fas-Funktion) tragen, sowie Gemischen dieser Produkte ausgewählt ist, wobei diese Fas-Funktionen untereinander identisch oder verschieden sind.

**13.** Klebstoff zur Beschichtung von dichten Oberflächen eines Gebäudes nach Anspruch 12, wie in einem der Ansprüche 1 bis 8 definiert.

**14.** Fliesenklebstoff nach Anspruch 13.

**15.** Fertigsatz zur Durchführung des Verfahrens nach einem der Ansprüche 1 bis 11, **dadurch gekennzeichnet, dass** er insbesondere Folgendes umfasst:

• gegebenenfalls mindestens eine Haftunterschichtzusammensetzung,
• mindestens eine wässrige Dispersion von Silikonöl(en), die Folgendes umfasst:

  - A- 100 Gewichtsteile mindestens eines Organopolysiloxanöls (A), das durch Kondensation zu einem Elastomer vernetzen kann, falls erforderlich in Anwesenheit eines Vernetzungsmittels (B);
  - A'- gegebenenfalls bis zu 30 Gewichtsteile mindestens eines nicht reaktionsfähigen Organopolysiloxanöls;
  - B- falls erforderlich, 0,1 bis 100 Gewichtsteile mindestens eines Vernetzungsmittels (B);
  - C- gegebenenfalls bis zu 50 Gewichtsteile mindestens eines Haftvermittlers (C);
  - D- bis zu 200 Gewichtsteile im Trockenzustand eines Füllstoffs (D);
  - E- eine katalytisch wirksame Menge einer katalytischen Härterverbindung (E), die bis zu 3 Gewichtsteile ausmachen kann;
  - F- mindestens einen Emulgator (F);
  - G- gegebenenfalls mindestens ein funktionelles Additiv (G);
  - H- Wasser;

wobei die Dispersion nach Beschichtung auf einen Träger und Vernetzung das Erhalten einer dichten Membran ermöglicht;

• mindestens einen wie in Anspruch 13 oder 14 definierten Klebstoff,
• und gegebenenfalls mindestens eine äußere Deckschicht.

**16.** Verwendung:

- einer wässrigen Dispersion von Silikonöl, die Folgendes umfasst:

  - A- 100 Gewichtsteile mindestens eines Organopolysiloxanöls (A), das durch Kondensation zu einem Elastomer vernetzen kann, falls erforderlich in Anwesenheit eines Vernetzungsmittels (B);
  - A'- gegebenenfalls bis zu 30 Gewichtsteile mindestens eines nicht reaktionsfähigen Organopolysiloxanöls;
  - B- falls erforderlich, 0,1 bis 100 Gewichtsteile mindestens eines Vernetzungsmittels (B);
  - C- gegebenenfalls bis zu 50 Gewichtsteile mindestens eines Haftvermittlers (C);
  - D- bis zu 200 Gewichtsteile im Trockenzustand eines Füllstoffs (D);
  - E- eine katalytisch wirksame Menge einer katalytischen Härterverbindung (E), die bis zu 3 Gewichtsteile ausmachen kann;
  - F- mindestens einen Emulgator (F);

- G- gegebenenfalls mindestens ein funktionelles Additiv (G);
- H- und Wasser;

- und eines Klebstoffs für die äußere Deckschicht (beispielsweise Fliesen), der mindestens einen wie oben definierten Haftvermittler (C') umfasst;

zur Herstellung einer dichten Oberflächenbeschichtung für Gebäude (Fußboden/Wand/Decke), wobei die Beschichtung aus einer Überlagerung besteht, die ausgehend von der zu beschichtenden Oberfläche Folgendes umfasst:

➢ gegebenenfalls mindestens eine Haftunterschicht,
➢ mindestens eine wasserdichte Polymermembran,
➢ (gegebenenfalls mindestens eine Lage aus einem Web- oder Vliesfasermaterial),
➢ mindestens eine Klebstoffschicht,
➢ mindestens eine äußere Deckschicht.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0248443 A
- US 5286318 A
- FR 2791693
- FR 2110659
- US 5162060 A
- EP 266729 A
- US 3355406 A
- US 3433780 A
- US 4554187 A
- EP 304719 A
- FR 2638166 A
- US 3294725 A
- US 4584341 A
- US 4618642 A
- US 4608412 A
- US 4525565 A
- EP 387157 A
- EP 340120 A
- EP 364375 A
- FR 1248826 A
- FR 1023477
- WO 0037549 A
- US 3862919 A
- BE 842305 A
- EP 147323 A
- EP 235049 A
- GB 1289900 A
- FR 2753708 A
- WO 9813410 A